# EUROPEAN PATENT APPLICATION

(11) **EP 4 075 843 A1**
(43) Date of publication of application: **19.10.2022**
(21) Application number: 19958691.8
(22) Date of filing: 31.12.2019
(51) Int. Cl.: H04W 8/24, H04B 17/00, H04W 24/10

(54) **METHOD AND APPARATUS FOR REPORTING MEASUREMENT INFORMATION, AND METHOD AND APPARATUS FOR COLLECTING MEASUREMENT INFORMATION**

(71) Applicant: Huawei Technologies Co., Ltd., Shenzhen, Guangdong 518129, (CN)
(72) Inventor: ZENG, Qinghai, Shenzhen, Guangdong 518129 (CN); ZHANG, Hongping, Shenzhen, Guangdong 518129 (CN)
(74) Representative: Epping - Hermann - Fischer
(86) International application number: PCT/CN2019/130778
(87) International publication number: WO 2021/134597

(57) **Abstract**

A measurement information reporting method, a measurement information collection method, and an apparatus are provided, to protect privacy of a terminal when measurement information is reported. The method includes: A network device sends a broadcast message. A terminal receives the broadcast message from the network device, where the broadcast message includes configuration information, the configuration information includes information about a common channel resource, and the common channel resource is used to transmit measurement information. The terminal sends the measurement information to the network device on the common channel resource. The network device receives the measurement information on the common channel resource. In this case, the configuration information is notified to the terminal by using the broadcast message, the configuration information carries the information about the common channel resource, and the terminal sends the measurement information to the network device on the common channel resource. In this way, when receiving the measurement information on the common channel resource, the network device does not know a specific terminal that sends the measurement information. Therefore, privacy of the terminal can be protected from being disclosed, and the measurement information can be collected.

## Description

### TECHNICAL FIELD

This application relates to the field of communication technologies, and in particular, to a measurement information reporting method, a measurement information collection method, and an apparatus.

### BACKGROUND

In some application scenarios, a network side needs to collect measurement information reported by a terminal. For example, in an artificial intelligence scenario, the network side needs to collect the measurement information reported by the terminal, and perform machine learning (machine learning, ML) based on the measurement information. When reporting the measurement information, the terminal inevitably discloses privacy of the terminal. For example, a location of the terminal, or a specific type of service performed by the terminal at specific time may be obtained by the network side when the measurement information is reported. How to protect the privacy of the terminal when the measurement information is reported is a problem that needs to be resolved.

### SUMMARY

This application provides a measurement information reporting method, a measurement information collection method, and an apparatus, to protect privacy of a terminal when measurement information is reported.

According to a first aspect, a measurement information reporting method is provided. The method includes the following steps: A terminal receives a broadcast message from a network device, where the broadcast message includes configuration information, the configuration information includes information about a common channel resource, and the common channel resource is used to transmit measurement information. The terminal sends the measurement information to the network device on the common channel resource. In this case, the terminal obtains the configuration information by using the broadcast message, and the terminal sends the measurement information to the network device on the common channel resource. In this way, when receiving the measurement information on the common channel resource, the network device does not know a specific terminal that sends the measurement information. Therefore, privacy of the terminal can be protected from being disclosed, and the measurement information can be collected.

In a possible design, when reporting the measurement information, the terminal does not carry an identifier of the terminal. The identifier may be any information that can identify the terminal, for example, a terminal ID. In this way, it is further ensured that the network device cannot obtain privacy of the terminal, to ensure that privacy of the terminal is not disclosed.

In a possible design, the configuration information further includes a determining parameter, and the determining parameter is used by the terminal to determine whether the measurement information needs to be collected. A quantity of terminals that collect the measurement information may be limited by using the determining parameter, and it is not required that all terminals that receive the configuration information collect the measurement information, so that air interface resources can be saved, measurement information of terminals that satisfy a condition can be collected, and the collected measurement information is more accurate.

In a possible design, the determining parameter includes one or a combination of the following: an area range, a service type, a slice, a slice list, a terminal type, or a terminal selection factor that is applicable to the configuration information.

In a possible design, the method further includes: The terminal determines, based on the determining parameter and a status parameter of the terminal, that the measurement information needs to be collected, where the status parameter of the terminal includes one or a combination of the following: a location of the terminal, a service performed by the terminal, a slice to which the service performed by the terminal belongs, a capability of the terminal, or a random number generated by the terminal.

According to a second aspect, a measurement information collection method is provided. The method includes the following steps: A network device sends a broadcast message, where the broadcast message includes configuration information, the configuration information includes information about a common channel resource, and the common channel resource is used to transmit measurement information. The network device receives the measurement information on the common channel resource. In this case, the configuration information is notified to a terminal by using the broadcast message, the configuration information carries the information about the common channel resource, and the terminal sends the measurement information to the network device on the common channel resource. In this way, when receiving the measurement information on the common channel resource, the network device does not know a specific terminal that sends the measurement information. Therefore, privacy of the terminal can be protected from being disclosed, and the measurement information can be collected.

In a possible design, the network device is a distributed unit DU, and the DU receives a first message from a centralized unit CU, where the first message includes the configuration information. Certainly, the configuration information may alternatively be configuration information generated by the DU.

In a possible design, the first message further includes a first general packet radio service tunneling protocol GTP-tunnel endpoint identifier, the first GTP-tunnel endpoint identifier is used to identify an endpoint of a tunnel on the CU, and the tunnel is used to transmit the measurement information on an F1 interface. The method further includes: The DU determines a second GTP-tunnel endpoint identifier based on the first GTP-tunnel endpoint identifier, and the DU sends the second GTP-tunnel endpoint identifier to the CU, where the second GTP-tunnel endpoint identifier is used to identify an endpoint of the tunnel on the DU, and the tunnel is used to transmit the measurement information on the F1 interface. In this way, the tunnel for transmitting the measurement information between the CU and the DU can be established. Compared with transmitting the measurement information by using signaling, transmitting the measurement information through the tunnel on the F1 interface can support a larger data amount.

The DU sends the measurement information to the CU, where the measurement information includes the first GTP-tunnel endpoint identifier and the second GTP-tunnel endpoint identifier.

In a possible design, the DU further sends measurement information collected by the DU to the CU.

In a possible design, the first message is an F1 setup response message. The configuration information is transmitted in an F1 setup process, and AI air interface configuration information is broadcast through an air interface. In this way, AI measurement information collection can be quickly started.

In a possible design, the first message is a CU configuration update response message. AI configuration information is delivered in an E2/F1 configuration update process, so that AI measurement information collection can be configured after a CU/DU device is started. This has better flexibility.

According to a third aspect, a measurement information collection method is provided. The method includes the following steps: A centralized unit CU sends a first message to a distributed unit DU, where the first message includes configuration information, the configuration information includes information about a common channel resource, and the common channel resource is used to transmit measurement information. The CU receives the measurement information from the DU, where the measurement information includes measurement information that is received by the DU on the common channel resource and that is from a terminal device. In this way, the measurement information is transmitted by configuring the common channel resource, so that privacy of the terminal can be protected from being disclosed, and the measurement information can be collected.

In a possible design, the measurement information includes measurement information collected by the DU.

In a possible design, the first message further includes a first general packet radio service tunneling protocol GTP-tunnel endpoint identifier, the first GTP-tunnel endpoint identifier is used to identify an endpoint of a tunnel on the CU, and the tunnel is used to transmit the measurement information on an F1 interface. The method further includes: The CU receives a second GTP-tunnel endpoint identifier from the DU, where the second GTP-tunnel endpoint identifier is used to identify an endpoint of the tunnel on the DU, and the tunnel is used to transmit the measurement information on the F1 interface. In this way, the tunnel for transmitting the measurement information between the CU and the DU can be established. Compared with transmitting the measurement information by using signaling, transmitting the measurement information through the tunnel on the F1 interface can support a larger data amount. In a possible design, before that a first message is sent to a distributed unit DU, the method further includes: The CU receives a second message from a near real-time radio access network intelligent controller RIC, where the second message includes the configuration information, to provide more possible manners of generating the configuration information. That is, the configuration information may be generated by the RIC, may be generated by the CU, or may be generated by the DU.

In a possible design, the CU sends the measurement information to the near real-time RIC. The RIC can be used for machine learning and so on based on the measurement information.

In a possible design, the measurement information includes measurement information collected by the CU. The measurement information reported by the CU to the RIC may include: information collected by the CU, data that is collected by the DU and that is received by the CU, or data that is collected by the terminal, that is reported by the DU, and that is received by the CU.

In a possible design, the second message further includes a third GTP-tunnel endpoint identifier, the third GTP-tunnel endpoint identifier is used to identify an endpoint of a tunnel on the near real-time RIC, and the tunnel is used to transmit the measurement information on an E2 interface. The method further includes: The CU determines a fourth GTP-tunnel endpoint identifier based on the third GTP-tunnel endpoint identifier, and the CU sends the fourth GTP-tunnel endpoint identifier to the RIC, where the fourth GTP-tunnel endpoint identifier is used to identify an endpoint of the tunnel on the CU, and the tunnel is used to transmit the measurement information on the E2 interface. Compared with transmitting the measurement information by using signaling, transmitting the measurement information through the tunnel on the E2 interface can support a larger data amount.

In a possible design, the configuration information may be transmitted in an F1 setup process. For example, the first message is an F1 setup response message. The configuration information is transmitted in the F1 setup process, and AI air interface configuration information is broadcast through an air interface. In this way, AI measurement information collection can be quickly started. Further, broadcasting the common channel resource helps implement anonymous reporting of the measurement information, to ensure that privacy of the terminal is not disclosed.

In a possible design, the configuration information may be transmitted in an E2 setup process. For example, the second message is an E2 setup response message. The configuration information is transmitted in the E2 setup process, and AI air interface configuration information is broadcast through an air interface. In this way, AI measurement information collection can be quickly started. Further, broadcasting the common channel resource helps implement anonymous reporting of the measurement information, to ensure that privacy of the terminal is not disclosed.

In a possible design, the configuration information may be transmitted in an F1 configuration update process. For example, the first message is a CU configuration update response message. The configuration information is transmitted in the F1 configuration update process, so that AI measurement information collection can be configured after a CU/DU device is started. This has better flexibility. Further, broadcasting the common channel resource helps implement anonymous reporting of the measurement information, to ensure that privacy of the terminal is not disclosed.

In a possible design, the configuration information may be transmitted in an E2 configuration update process. For example, the second message is a near real-time RIC configuration update response message. The configuration information is transmitted in the E2 configuration update process, so that AI measurement information collection can be configured after a CU/DU device is started. This has better flexibility. Further, broadcasting the common channel resource helps implement anonymous reporting of the measurement information, to ensure that privacy of the terminal is not disclosed.

According to a fourth aspect, a measurement information collection method is provided. The method includes the following steps: A near real-time radio access network intelligent controller RIC sends a first message to a centralized unit CU, where the first message includes configuration information, the configuration information includes information about a common channel resource, and the common channel resource is used to transmit measurement information. The RIC receives the measurement information from the CU, where the measurement information includes measurement information that is received by a distributed unit DU on the common channel resource and that is from a terminal device. In this way, the measurement information is transmitted by configuring the common channel resource, so that privacy of the terminal can be protected from being disclosed, and the measurement information can be collected.

In a possible design, the first message further includes a first GTP-tunnel endpoint identifier, the first GTP-tunnel endpoint identifier is used to identify an endpoint of a tunnel on the near real-time RIC, and the tunnel is used to transmit the measurement information on an E2 interface. The method further includes: The RIC receives a second GTP-tunnel endpoint identifier from the CU, where the second GTP-tunnel endpoint identifier is used to identify an endpoint of the tunnel on the CU, and the tunnel is used to transmit the measurement information on the E2 interface. Compared with transmitting the measurement information by using signaling, transmitting the measurement information through the tunnel on the E2 interface can support a larger data amount.

In a possible design, the first message is an E2 setup response message. The configuration information is transmitted in an E2 setup process, and AI air interface configuration information is broadcast through an air interface. In this way, AI measurement information collection can be quickly started. Further, broadcasting the common channel resource helps implement anonymous reporting of the measurement information, to ensure that privacy of the terminal is not disclosed.

In a possible design, the first message is a near real-time RIC configuration update response message. The configuration information is transmitted in an E2 configuration update process, so that AI measurement information collection can be configured after a CU/DU device is started. This has better flexibility. Further, broadcasting the common channel resource helps implement anonymous reporting of the measurement information, to ensure that privacy of the terminal is not disclosed.

With reference to the second aspect, the third aspect, or the fourth aspect, there may be the following possible design: The configuration information further includes a determining parameter, and the determining parameter is used by the terminal to determine whether the measurement information needs to be collected. Optionally, the determining parameter includes one or a combination of the following: an area range, a service type, a slice, a slice list, a terminal type, or a terminal selection factor that is applicable to the configuration information.

With reference to the first aspect, the second aspect, the third aspect, or the fourth aspect, there may be the following possible design:
In a possible design, the configuration information further includes a measurement item and/or an index value of the configuration information, and the index value of the configuration information is used to distinguish a plurality of sets of configuration information.

The measurement item may include one or a combination of the following: cell quality, beam quality, radio link failure information, connection setup failure information, an uplink sending delay, or signal strength.

In a possible design, the configuration information further includes one or more of the following: a trigger condition for sending the measurement information, an interval of sending the measurement information, or a quantity of times of sending the measurement information, used to indicate when the terminal can report the measurement information. In a possible design, the common channel resource includes one or a combination of the following: a random access resource and a physical uplink shared channel resource.

In a possible design, the measurement information includes any one of the following: information used for machine learning, a gradient used for federated learning, cell quality, beam quality, radio link failure information, connection setup failure information, an uplink sending delay, or signal strength.

In a possible design, the configuration information further includes a machine learning model and/or a machine learning algorithm

In a possible design, the configuration information further includes a key. The configuration information is encrypted, so that a malicious terminal cannot obtain the configuration information of the common channel resource, and the malicious terminal cannot correctly use the common channel resource to send uplink data.

Optionally, the terminal may obtain a corresponding decryption key after registering with a mobile network, from a default setting, or in another manner.

In a possible design, the measurement information includes the key.

In a possible design, the configuration information is generated by the DU, and an encryption function is introduced into the DU, for example, a PDCP layer is introduced, to perform encryption processing on the configuration information at the PDCP layer.

Alternatively, a new process is added between the CU and the DU. The DU sends the generated configuration information to the CU, the CU encrypts the configuration information and returns the encrypted configuration information to the DU, and the DU broadcasts the configuration information on an air interface.

For terminals that do not register with a network, a specific dedicated identifier may be allocated to each of the terminals at delivery, and the dedicated identifier carries verification information.

A network device learns of a verification algorithm in advance, and the terminal includes the dedicated identifier when reporting the measurement information. After receiving the dedicated identifier, the network device determines, by using the verification algorithm, whether the measurement information is reported by an authorized terminal. According to a fifth aspect, an apparatus is provided. The apparatus may be a terminal, an apparatus (for example, a chip, a chip system, or a circuit) in the terminal, or an apparatus that can be used in cooperation with the terminal. In a design, the apparatus may include modules that are in one-to-one correspondence with the methods/operations/steps/actions described in the first aspect. The modules may be implemented by a hardware circuit, software, or a combination of a hardware circuit and software. In a design, the apparatus may include a processing module and a communication module. The processing module is configured to invoke the communication module to perform a receiving function and/or a sending function. An example is as follows:
The processing module is configured to invoke the communication module to specifically perform the following operations: receiving a broadcast message from a network device, where the broadcast message includes configuration information, the configuration information includes information about a common channel resource, and the common channel resource is used to transmit measurement information; and sending the measurement information to the network device on the common channel resource.

The processing module and the communication module may further perform the method according to any one of the first aspect and the possible designs of the first aspect. Details are not described herein again.

For beneficial effects achieved in the fifth aspect and the possible designs, refer to corresponding effects in the first aspect. Details are not described herein again.

According to a sixth aspect, an apparatus is provided. The apparatus may be a network device, an apparatus (for example, a chip, a chip system, or a circuit) in the network device, or an apparatus that can be used in cooperation with the network device. The network device herein may be the network device described in the second aspect, the CU described in the third aspect, or the near real-time RIC described in the fourth aspect. In a design, the apparatus may include modules that are in one-to-one correspondence with the methods/operations/steps/actions described in the second aspect, the third aspect or the fourth aspect. The modules may be implemented by a hardware circuit, software, or a combination of a hardware circuit and software. In a design, the apparatus may include a processing module and a communication module. The processing module is configured to invoke the communication module to perform a receiving function and/or a sending function. An example is as follows:
The processing module is configured to invoke the communication module to specifically perform the following operations: sending a broadcast message, where the broadcast message includes configuration information, the configuration information includes information about a common channel resource, and the common channel resource is used to transmit measurement information; and receiving the measurement information on the common channel resource. For example, the processing module is configured to invoke the communication module to send a first message to a distributed unit DU, where the first message includes configuration information, the configuration information includes information about a common channel resource, and the common channel resource is used to transmit measurement information; and receive the measurement information from the DU, where the measurement information includes measurement information that is received by the DU on the common channel resource and that is from a terminal device. For example, the processing module is configured to invoke the communication module to send a first message to a centralized unit CU, where the first message includes configuration information, the configuration information includes information about a common channel resource, and the common channel resource is used to transmit measurement information; and receive the measurement information from the CU, where the measurement information includes measurement information that is received by a distributed unit DU on the common channel resource and that is from a terminal device.

The processing module and the communication module may further perform the method according to any one of the second aspect, the third aspect, the fourth aspect, and the possible designs of the aspects. Details are not described herein again.

For beneficial effects achieved in the sixth aspect and the possible designs, refer to corresponding effects in the second aspect, the third aspect, or the fourth aspect. Details are not described herein again.

According to a seventh aspect, an embodiment of this application provides an apparatus. The apparatus includes a communication interface and a processor, and the communication interface is used by the apparatus to communicate with another device, for example, to send and receive data or a signal. For example, the communication interface may be a transceiver, a circuit, a bus, a module, or a communication interface of another type, and the another device may be a network device, for example, a gNB. For another example, the another device may be a DU. The processor is configured to invoke a group of programs, instructions, or data, to perform the method described in the first aspect. The apparatus may further include a memory, configured to store the programs, the instructions, or the data invoked by the processor. The memory is coupled to the processor, and when executing the instructions or the data stored in the memory, the processor can implement the method described in the first aspect.

According to an eighth aspect, an embodiment of this application provides an apparatus. The apparatus includes a communication interface and a processor, and the communication interface is used by the apparatus to communicate with another device, for example, to send and receive data or a signal. For example, the communication interface may be a transceiver, a circuit, a bus, a module, or a communication interface of another type, and the apparatus may be a gNB, a DU, a CU, or a near real-time RIC. The processor is configured to invoke a group of programs, instructions, or data, to perform the method described in the second aspect, the third aspect, or the fourth aspect. The apparatus may further include a memory, configured to store the programs, the instructions, or the data invoked by the processor. The memory is coupled to the processor, and when executing the instructions or the data stored in the memory, the processor can implement the method described in the second aspect, the third aspect, or the fourth aspect. According to a ninth aspect, an embodiment of this application further provides a computer-readable storage medium. The computer-readable storage medium stores computer-readable instructions, and when the computer-readable instructions are run on a computer, the computer is enabled to perform the method according to any one of the aspects or the possible designs of the aspects.

According to a tenth aspect, an embodiment of this application provides a chip system. The chip system includes a processor, and may further include a memory, configured to implement the method according to any one of the first aspect or the possible designs of the first aspect. The chip system may include a chip, or may include a chip and another discrete device.

According to an eleventh aspect, an embodiment of this application provides a chip system. The chip system includes a processor, and may further include a memory, configured to implement the method according to any one of the second aspect, the third aspect, the fourth aspect, or the possible designs of the aspects. The chip system may include a chip, or may include a chip and another discrete device.

According to a twelfth aspect, an embodiment of this application provides a system. The system includes a terminal and a network device, the terminal performs the method according to any one of the first aspect or the possible designs thereof, and the network device performs the method according to any one of the second aspect or the possible designs thereof.

According to a thirteenth aspect, an embodiment of this application provides a system. The system includes a terminal, a DU, a CU, and a near real-time RIC, the terminal performs the method according to any one of the first aspect or the possible designs thereof, the DU performs the method according to any one of the second aspect or the possible designs thereof, the CU performs the method according to any one of the third aspect or the possible designs thereof, and the near real-time RIC performs the method according to any one of the fourth aspect or the possible designs thereof.

According to a fourteenth aspect, a computer program product including instructions is provided. When the computer program product runs on a computer, the computer is enabled to perform the method according to any one of the foregoing aspects and the possible designs of the foregoing aspects.

### BRIEF DESCRIPTION OF DRAWINGS

FIG. 1a is a schematic diagram 1 of an architecture of a communication system according to an embodiment of this application;
FIG. 1b is a schematic diagram 2 of an architecture of a communication system according to an embodiment of this application;
FIG. 2 is a schematic flowchart of a measurement information reporting method and a measurement information collection method according to an embodiment of this application;
FIG. 3 is a schematic diagram of a common channel resource according to an embodiment of this application;
FIG. 4a is a schematic diagram of a RAN architecture according to an embodiment of this application;
FIG. 4b is a schematic diagram of implementing an AI function in a network device gNB according to an embodiment of this application;
FIG. 4c is a schematic diagram of implementing an AI function in a CU according to an embodiment of this application;
FIG. 4d is a schematic diagram of implementing an AI function in a CU-CP according to an embodiment of this application;
FIG. 5 is a schematic diagram of a horizontal federated learning model according to an embodiment of this application;
FIG. 6 is a schematic diagram of a scenario of multi-layer AI function deployment according to an embodiment of this application;
FIG. 7 is a schematic flowchart of a measurement information reporting method and a measurement information collection method in an application scenario according to an embodiment of this application;
FIG. 8 is a schematic flowchart 1 of a measurement information reporting method and a measurement information collection method in an architecture including a near real-time RIC, a CU, and a DU according to an embodiment of this application;
FIG. 9 is a schematic flowchart 2 of a measurement information reporting method and a measurement information collection method in an architecture including a near real-time RIC, a CU, and a DU according to an embodiment of this application;
FIG. 10 is a schematic flowchart 3 of a measurement information reporting method and a measurement information collection method in an architecture including a near real-time RIC, a CU, and a DU according to an embodiment of this application;
FIG. 11 is a schematic flowchart 1 of a measurement information reporting method and a measurement information collection method in an architecture including a CU and a DU according to an embodiment of this application;
FIG. 12 is a schematic flowchart 2 of a measurement information reporting method and a measurement information collection method in an architecture including a CU and a DU according to an embodiment of this application;
FIG. 13 is a schematic structural diagram 1 of an apparatus according to an embodiment of this application; and
FIG. 14 is a schematic structural diagram 2 of an apparatus according to an embodiment of this application.

### DESCRIPTION OF EMBODIMENTS

Embodiments of this application provide a measurement information reporting method, a measurement information collection method, and an apparatus, so that a terminal reports measurement information anonymously, thereby helping ensure privacy of the terminal. The method and the apparatus are based on a same technical concept or similar technical concepts. Because a problem-resolving principle of the method is similar to that of the apparatus, mutual reference may be made to implementations of the apparatus and the method. Repeated parts are not described in detail. In descriptions of embodiments of this application, "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of' means two or more than two. In addition, it should be understood that, in the descriptions of this application, terms such as "first", "second", and "third" are merely used for differentiation and description, but cannot be understood as an indication or implication of relative importance or an indication or implication of an order. Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. Terms "include", "contain", "have", and their variants all mean "include but are not limited to", unless otherwise specifically emphasized.

The measurement information reporting method and the measurement information collection method provided in embodiments of this application may be applied to a 4th generation (4th generation, 4G) communication system, for example, long term evolution (long term evolution, LTE), or may be applied to a 5th generation (5th generation, 5G) communication system, for example, 5G new radio (new radio, NR), or may be applied to various future communication systems.

The following describes in detail embodiments of this application with reference to the accompanying drawings.

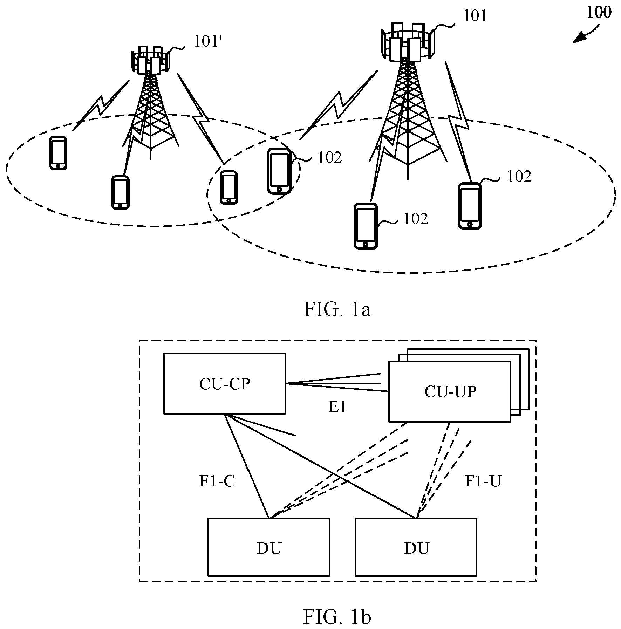

FIG. 1a shows an architecture of a possible communication system to which a measurement information reporting method and a measurement information collection method are applicable according to an embodiment of this application. As shown in FIG. 1, the communication system 100 includes a network device 101 and one or more terminals 102. The network device 101 provides a service for the terminal 102 within a coverage area. For example, as shown in FIG. 1a, the network device 101 provides wireless access for the one or more terminals 102 within the coverage area of the network device 101. In addition, there may be an overlapping area between coverage areas of network devices, for example, the network device 101 and a network device 101'. The network devices may further communicate with each other. For example, the network device 101 may communicate with the network device 101'. The terminal 102 is also referred to as user equipment (user equipment, UE), a mobile station (mobile station, MS), a mobile terminal (mobile terminal, MT), or the like, and is a device that provides a user with voice and/or data connectivity. For example, the terminal 102 includes a handheld device or a vehicle-mounted device having a wireless connection function. Currently, the terminal 102 may be a mobile phone (mobile phone), a tablet computer, a notebook computer, a palmtop computer, a mobile internet device (mobile internet device, MID), a wearable device (such as a smartwatch, a smart band, or a pedometer), a vehicle-mounted device (such as a car, a bicycle, an electric vehicle, an airplane, a ship, a train, or a high-speed train), a virtual reality (virtual reality, VR) device, an augmented reality (augmented reality, AR) device, a wireless terminal in industrial control (industrial control), a smart home device (such as a refrigerator, a television, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (such as an intelligent robot, a hot balloon, an uncrewed aerial vehicle, or an aircraft), or the like. The terminal 102 may alternatively be another device having a terminal function. For example, the terminal 102 may alternatively be a terminal that has the terminal function in D2D communication.

The network device 101 is a node in a radio access network (radio access network, RAN), and may also be referred to as a base station or a RAN node (or device). Currently, some examples of the network device 101 are a next-generation NodeB (next-generation NodeB, gNB), a next-generation evolved NodeB (next-generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP). The network device 101 may alternatively be a satellite, and the satellite may also be referred to as a high-altitude platform, a high-altitude aircraft, or a satellite base station. The network device 101 may alternatively be another device having a network device function. For example, the network device 101 may alternatively be a device that has the network device function in the D2D communication. Alternatively, the network device 101 may alternatively be a network device in a possible future communication system.

In some deployments, the network device may include a centralized unit (centralized unit, CU) and a distributed unit (distributed unit, DU). To be specific, functions of a base station in an original access network are split, some functions of the base station are deployed on one CU, the remaining functions are deployed on a DU, and one or more DUs share one CU. This can reduce costs and facilitate network expansion. The network device may further include an active antenna unit (active antenna unit, AAU). The CU implements some functions of the network device, and the DU implements some functions of the network device. For example, the CU is responsible for processing a non-real-time protocol and service, and implements functions of a radio resource control (radio resource control, RRC) layer, a service data adaptation protocol (service data adaptation protocol, SDAP) layer, and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In a 3GPP NR next-generation radio access technology (next-generation RAT) protocol, the CU and the DU are connected through an F1 interface. On behalf of the gNB, the CU is connected to the core network through an NG interface. On behalf of the gNB, the CU is connected to another gNB through an Xn interface. On behalf of the gNB, the CU may alternatively be connected to another eNB through an X2 interface to perform a dual connectivity operation.

Further, as shown in FIG. 1b, the CU may be further divided into a CU-control plane (control plane, CP) and a CU-user plane (user plane, UP). The CU-CP is responsible for a control plane function, and mainly includes an RRC layer and a PDCP layer corresponding to the control plane, namely, a PDCP-C. The PDCP-C is mainly responsible for encryption and decryption, integrity protection, data transmission, and the like of control plane data. The CU-UP is responsible for a user plane function, and mainly includes an SDAP layer and a PDCP layer corresponding to the user plane, namely, a PDCP-U. The SDAP is mainly responsible for processing data of the core network and mapping a flow to a bearer. The PDCP-U is mainly responsible for encryption and decryption, integrity protection, header compression, serial number maintenance, data transmission, and the like of a data plane. The CU-CP is connected to the CU-UP through an E1 interface. On behalf of the gNB, the CU-CP is connected to the core network through the NG interface, and is connected to the DU through an F1 interface-control plane, namely, F1-C. The CU-UP is connected to the DU through an F1 interface-user plane, namely, F1-U. Certainly, in another possible implementation, the PDCP-C is also in the CU-UP.

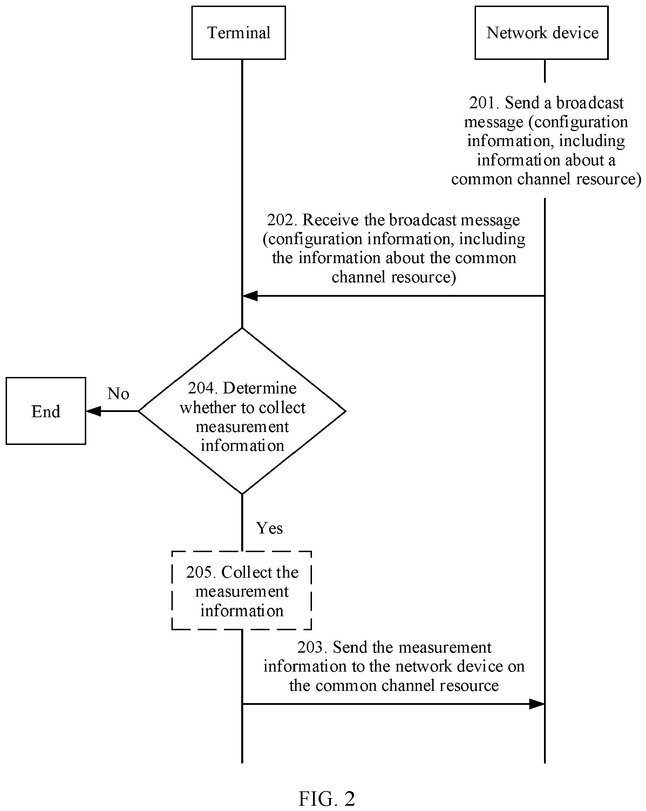

Based on the architectures of the communication systems shown in FIG. 1a and FIG. 1b, the following describes in detail methods provided in embodiments of this application. As shown in FIG. 2, a procedure of a measurement information reporting method and a measurement information collection method according to an embodiment of this application is described as follows.

S201. A network device sends a broadcast message.

The broadcast message includes configuration information. The configuration information includes information about a common channel resource. The common channel resource is used to transmit measurement information, that is, the common channel resource is used by a terminal to report the measurement information.

S202. The terminal receives the broadcast message from the network device.

S203. The terminal sends the measurement information to the network device on the common channel resource. The network device receives the measurement information on the common channel resource.

The following describes some possible implementations of the steps and some possible designs of embodiments of this application.

In a possible design, the network device may alternatively send the configuration information to the terminal in an RRC connected state by using dedicated signaling. This is not limited to an implementation of notifying the configuration information by using the broadcast message.

The configuration information may further include some other information. An example is as follows:
The configuration information may include an index value or an identifier of the configuration information. If the broadcast message includes a plurality of sets of configuration information, the plurality of sets of configuration information may be distinguished by using the index value or the identifier. The index value of the configuration information may indicate or be associated with all information included in the configuration information. For the index value of the configuration information, the terminal may include the index value when reporting the measurement information, and the index value is used to indicate that the reported measurement information is based on the configuration information indicated by the index value in the plurality of sets of configuration information.

The configuration information may include an area range. The area range indicates an area to which the configuration information is applicable. The area range may be a geographical range. For example, the area range is one or more cells, and the one or more cells may be indicated in a form of a cell list. If the network device sends a plurality of sets of configuration information to the terminal, and cells or cell lists to which the plurality of sets of configuration information are applicable are not completely the same, an area range in a set of configuration information may be mapped to an index of the configuration information. One index corresponds to one set of configuration information, that is, one index corresponds to one area range. Alternatively, the plurality of sets of configuration information may be sent by using a plurality of messages, to distinguish configuration information of different area ranges.

The area range may alternatively be a geographical area. Generally, the geographical area refers to an area defined by longitude and latitude.

The configuration information may include a measurement item. The measurement item refers to information that needs to be measured by the terminal. For example, the measurement item includes one or a combination of the following: cell quality, beam quality, radio link failure information, connection setup failure information, an uplink sending delay, or signal strength. The radio link failure information may include information such as neighboring cell quality and a quantity of access attempts that is collected when a radio link failure occurs on the terminal. The connection setup failure information may include one or more of the following information obtained when a connection setup failure occurs: a cell, a location, time, a measurement result of a neighboring cell, a quantity of random access preamble sending attempts, information indicating whether a conflict is detected, or information indicating whether an uplink transmit power upper limit is reached. The signal strength may be signal strength of a wireless local area network (wireless local area network, WLAN).

The configuration information may include a terminal selection factor. The terminal selection factor is used by the terminal to determine whether the measurement information needs to be collected. The terminal selection factor may be a fixed value, for example, may be a value greater than 0 and less than 1, for example, 0.4, 0.5, or 0.6. A quantity of terminals that report the measurement information may be controlled by using the terminal selection factor. For example, if a quantity of terminals that receive the configuration information is 100%, 50% of the terminals may be controlled, by using the terminal selection factor, to report the measurement information. In this way, the measurement information can be collected, and air interface resources can be saved. Optionally, the terminal selection factor may be shared by a plurality of sets of configuration information, or the terminal selection factor may be independently set for each set of configuration information.

The configuration information may include a trigger condition for sending the measurement information or a trigger condition for reporting the measurement information, used to indicate a condition under which the terminal triggers reporting of the measurement information. The trigger condition may be periodic, or may be event-triggered. For example, reporting is triggered when quality of a serving cell is lower than a specified threshold. The trigger condition may further include triggering reporting immediately after the measurement information is collected, triggering reporting after a specified quantity of measurement information is collected, or triggering reporting when agreed time is reached. For the agreed time, a timer may be set when the configuration information is received, and the agreed time is reached when the timer expires.

The configuration information may include an interval of sending the measurement information or an interval of reporting the measurement information. The interval indicates how often the terminal sends the measurement information.

The configuration information may include a quantity of times of sending the measurement information, used to indicate a quantity of times that the terminal needs to send the measurement information after receiving the configuration information.

The configuration information may include a service type, used to indicate a specific service type for which measurement is to be performed.

The configuration information may include a slice or a slice list, used to indicate a service of a specific slice for which measurement is to be performed. The slice or the slice list may also be considered as a representation form of the area range. Similarly, if the network device sends a plurality of sets of configuration information to the terminal, and slices or slice lists in the sets of configuration information are not completely the same, a slice or a slice list in a set of configuration information may be mapped to an index of the configuration information. One index corresponds to one set of configuration information, that is, one index corresponds to one set of slices or one slice list. Alternatively, the plurality of sets of configuration information may be sent by using a plurality of messages, to distinguish configuration information of different slices or slice lists.

The configuration information may include a terminal type, used to indicate a terminal of a specific type that needs to collect and report the measurement information.

Certainly, the configuration information may further include other information. This is not limited herein.

The network device determines specific cells in which the configuration information is broadcast, and may determine, based on a slice to which the configuration information is applicable, the specific cells in which the configuration information is broadcast. In the cell in which the configuration information is broadcast, the network device may broadcast the configuration information by using an independent system information block (system information block, SIB), or may broadcast the configuration information by sharing one SIB with other system information. The network device may alternatively send the configuration information by using another broadcast mechanism such as paging. After the terminal receives the configuration information and before S203, the method may further include the following steps.

S204. The terminal determines whether to collect the measurement information, and if yes, performs S205. Otherwise, the terminal does not collect the measurement information and the procedure ends.

The configuration information further includes a determining parameter, and the determining parameter is used by the terminal to determine whether the measurement information needs to be collected. Specifically, the terminal may determine, based on a status of the terminal and the determining parameter in the received configuration information, whether to participate in measurement information collection. The determining parameter may include one or a combination of the following: an area range, a service type, a slice type, a terminal capability, a terminal type, or a terminal selection factor.

For example, the configuration information includes the area range, and the terminal may determine, based on a location and the area range of the terminal, whether to collect the measurement information. If the location of the terminal is within the area range, the terminal participates in measurement information collection; otherwise, the terminal does not collect the measurement information.

For example, the configuration information includes the service type, and the terminal determines, based on a service performed by the terminal and the service type, whether to collect the measurement information. If a type of the service performed by the terminal matches the service type, the terminal participates in measurement information collection; otherwise, the terminal does not collect the measurement information. If the configuration information includes the slice type, the terminal may further determine, based on a slice to which the service performed by the terminal belongs, whether to collect the measurement information. If a type of the slice to which the service performed by the terminal belongs matches the slice type, the terminal participates in measurement information collection; otherwise, the terminal does not collect the measurement information.

For another example, the configuration information includes the terminal type, and the terminal may compare a type of the terminal with the terminal type included in the configuration information. If the type of the terminal matches the terminal type included in the configuration information, the terminal collects the measurement information; otherwise, the terminal does not collect the measurement information.

Matching in this embodiment of this application may mean sameness or matching in another sense, for example, belonging to or being similar to.

For another example, the configuration information includes the terminal selection factor. The terminal may generate a random number, and determine, based on a result of comparison between the random number and the selection factor, whether to participate in measurement information collection. For example, if the selection factor is 0.6, the terminal may generate a random number from 0 to 1. If the random number is greater than 0.6, the terminal participates in measurement information collection; otherwise, the terminal does not collect the measurement information.

Each determining condition for the terminal to determine whether to collect the measurement information may be executed separately. Alternatively, two or more conditions may be combined for determining, and the terminal determines to collect the measurement information when the two or more conditions are satisfied.

S205. The terminal collects the measurement information, and performs S203 when a reporting condition is satisfied. After determining to collect the measurement information, the terminal collects the measurement information based on the measurement item in the configuration information.

When the trigger condition that is in the configuration information and that is for sending the measurement information is satisfied, S203 is performed. Optionally, after collecting the measurement information, the terminal may send the measurement information based on some parameters in the configuration information. For example, the measurement information is sent based on the interval of sending the measurement information or the quantity of times of sending the measurement information in the configuration information. The measurement information may be sent at a time or periodically, or the quantity of times of sending the measurement information may be a specific quantity of times. The terminal may immediately start to collect the measurement information after receiving the configuration information. The terminal may alternatively start to collect the measurement information when a specific condition is satisfied. The condition herein may be delivered by the network device by using the configuration information, or may be determined by the terminal.

If the network device delivers a plurality of sets of configuration information, the configuration information further includes an index value of the configuration information. When collecting measurement information, the terminal also needs to determine, based on the index value, to collect measurement information corresponding to a specific set of configuration information. In addition, when sending the measurement information to the network device, the terminal also needs to include the index value, used to indicate the set of configuration information to which the measurement information reported by the network device is specific.

When sending the measurement information to the network device, the terminal does not include an identifier of the terminal. In this case, the terminal sends the measurement information to the network device on the common channel resource without including the identifier of the terminal. In this way, when receiving the measurement information, the network device does not know a specific terminal that sends the measurement information. Therefore, privacy of the terminal can be protected from being disclosed, and the measurement information can be collected.

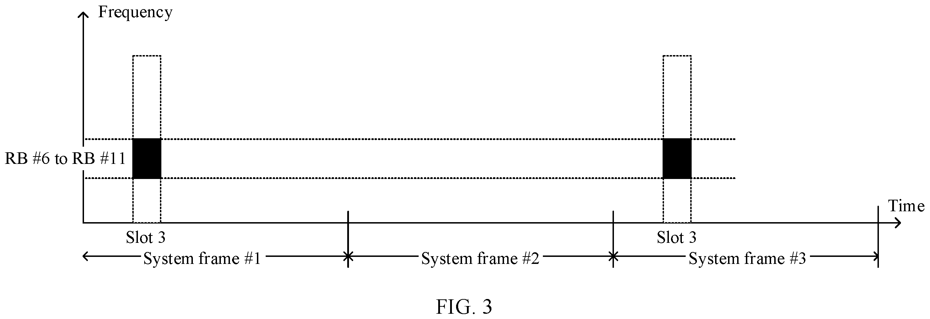

The terminal sends the measurement information on the common channel resource indicated by the configuration information. The common channel resource includes at least one of a time domain resource, a frequency domain resource, or a code domain resource. For example, as shown in FIG. 3, it is specified that a time-frequency resource that uses a sixth resource block to an eleventh resource block (resource block, RB) of a system frame number 1 and a subframe number 3 as an offset and uses a time length of two system frames as a periodicity is the common channel resource. The time-frequency domain resource may be a physical random access channel (physical random access channel, PRACH) resource for performing a random access process, a physical uplink shared channel (physical uplink shared channel, PUSCH) resource for performing uplink data transmission, or even a combination of the two resources. The PUSCH resource herein, commonly known as a grant-free (grant-free) resource in 3GPP, is still a common channel resource, even if the grant-free resource is configured for the terminal by using dedicated signaling. The network device may configure a same grant-free resource for a plurality of terminals by using the dedicated signaling, or configure the same grant-free resource for all terminals by using the broadcast message, so that different terminals contend for use.

For a specific time-frequency-code resource structure, refer to a protocol specification in 3GPP Release 15.

If the common channel resource in the configuration information includes the PRACH resource, and the configuration information does not indicate a dedicated preamble, the terminal may randomly select a preamble. For two-step random access, the common channel resource in the configuration information includes the PRACH resource and one or more paired PUSCH resources, and the terminal sends the selected preamble on the PRACH resource and sends the measurement information on the paired PUSCH resource.

Optionally, if the terminal is in an uplink synchronization state, the terminal only needs to send the measurement information on the PUSCH resource, and does not need to send the preamble. The terminal may select, at a moment of reporting the measurement information, a resource closest to the current moment from PRACH resources indicated by the configuration information, to send the preamble, and send the measurement information on a paired PUSCH resource. For four-step random access, the terminal sends the selected preamble on the PRACH resource, and the terminal may select a closest PRACH resource to send the preamble. The terminal receives a message 2 sent by the network device. The terminal sends a message 3 to the network device, where the message 3 carries the measurement information.

Because the common channel resource is not dedicated to one terminal, when the terminal uses the common channel resource to send the measurement information, a conflict and a sending failure may be caused when the terminal and another terminal use a same common channel resource at the same time. In this case, a mechanism similar to that in the four-step random access or the two-step random access may be reused to resolve the problem. Details are not described in this embodiment of this application. For detailed descriptions of processes of the two-step random access and the four-step random access, refer to a protocol specification in 3GPP Release 16.

The network device in the foregoing method embodiment may be a gNB. When applied to a CU/DU split architecture, the network device may alternatively be a DU.

This embodiment of this application may be applied to any scenario in which a network collects measurement information from a terminal. The terminal collects some measurement information based on an indication of the network, and reports the measurement information to a network side. The following uses some possible applicable scenarios as examples.

### Scenario 1: MDT

In LTE and NR systems, 3GPP standardizes minimization of drive tests (minimization of drive Tests, MDT), to reduce drive tests. In the MDT, whether mobile network signals in different areas have problems such as poor signal coverage or strong interference may be detected. The MDT includes logged MDT (logged MDT) and immediate MDT (immediate MDT). The logged MDT means that the terminal in an idle state or an inactive state periodically records a log based on a network configuration, or records a preset event when the event occurs. When accessing a system, the terminal reports the recorded event to the network. Specific recorded content includes an event type, occurrence time, a location, signal quality when the event occurs, and the like. A plurality of events and/or a plurality of records may be reported at a time. The immediate MDT is a detection manner in which the terminal is configured by the network to perform detection, and the terminal provides feedback immediately after the detection.

In a possible implementation, in the scenario 1, to avoid a privacy risk of the terminal, a manner of subscribing to some users to obtain the users' consent in advance is used. When a terminal corresponding to the user accesses the system, a core network may know, based on subscription data, whether the terminal is allowed by the user to participate in MDT data collection. If the terminal is allowed, the core network notifies the network device, so that the network device selects an appropriate terminal when receiving an MDT detection task from a network management system. Operations of this method are complex, and the MDT detection task may fail to be performed because no appropriate terminal can be selected. In addition, the users' doubts about privacy disclosure cannot be completely eliminated. Based on the method provided in this embodiment of this application, a disadvantage of the privacy disclosure of the terminal can be completely eliminated.

### Scenario 2: Self-organizing network (self-organizing network, SON)

The SON mainly aims to implement self-configuration, self-optimization, and self-maintenance of the network device. Specific characteristics include an automatic neighbor relation (automatic neighbor relation, ANR), mobility robustness optimization (mobility robustness optimization, MRO), mobility load balancing (mobility load balancing, MLB), random access channel (random access channel, RACH) optimization, energy saving, capacity and coverage optimization (capacity & coverage optimization, CCO), and physical cell identifier (physical cell identifier, PCI) conflict detection.

When this embodiment of this application is applied to the scenario 2, the terminal is enabled to report the collected measurement information on the common channel resource, thereby protecting the privacy of the terminal.

### Scenario 3: RAN Intelligentization Scenario

Artificial intelligence and machine learning (machine learning, ML) are introduced into RAN intelligentization. In machine learning, the measurement information collected by the terminal needs to be collected.

The RAN intelligentization is to introduce an artificial intelligence (artificial intelligence, AI) technology into a RAN. In the RAN, AI is used to optimize network configuration and parameter setting, and implement dynamic optimization based on different time, different locations, and different services.

Artificial intelligence is a branch of computer science, and simulation of an information process of human consciousness and thinking. ML is a core of artificial intelligence and is a branch of artificial intelligence. A machine learning theory is mainly to design and analyze some algorithms that enable a computer to automatically "learn". A machine learning algorithm is an algorithm that automatically analyzes data to obtain a rule and uses the rule to predict unknown data.

To better understand the concept of RAN intelligentization, the following examples are used for further description. In an urban environment, available wireless spectra are saturated. To satisfy the rapid growth of service requirements, it is inevitable to increase a quantity of antennas in the 4G and 5G eras. A massive antenna technology (massive MIMO) is one of core technologies in the 5G era. To exploit advantages of massive MIMO to the full, parameters of a massive MIMO network device need to be flexibly and adaptively adjusted, to adapt to service changes. However, antenna combination parameters vary with different locations, different scenarios, and different user distribution. In the 3G era, there are only 13 antenna parameter combinations (horizontal beamwidth and vertical beamwidth), which are easy to select based on expert experience. In the 4G era, there are hundreds of antenna parameter combinations (horizontal beamwidth, vertical beamwidth, and downtilt), which are difficult to determine based on the past experience. In the 5G era, there are thousands of parameter combinations (horizontal beamwidth, vertical beamwidth, downtilt, and a horizontal angle), which cannot be implemented by manual experience determining. Faced with a large quantity of parameter combinations and rapid service changes, and with low efficiency, high risks, and implementation difficulty of manual operations, the massive MIMO network device urgently requires a more intelligent and optimizable mechanism. AI is introduced to analyze and process a correspondence between various complex scenario features and beam parameter combinations, and can greatly shorten a long debugging phase and quickly obtain an optimal beam configuration parameter in a scenario at a specific location.

AT&T, China Mobile, Deutsche Telekom, NTT DOCOMO, and Orange jointly announced establishment of the open radio access network (open radio access network, O-RAN) Alliance. The O-RAN Alliance is a global operator-oriented project and aims to promote openness of a next-generation radio access network. The O-RAN Alliance proposes the concept of O-RAN, aiming to bring changes in the following three aspects to the radio access network RAN:
(1) Refine industrial division of radio device research and development and introduce a large quantity of standardized interfaces, to improve overall efficiency and competitiveness of the industry.
(2) Reduce research and development investment of the participated companies through reuse and sharing of open source software and a hardware reference design.
(3) Introduce the artificial intelligence technology to improve adaptability of a device to a complex environment.

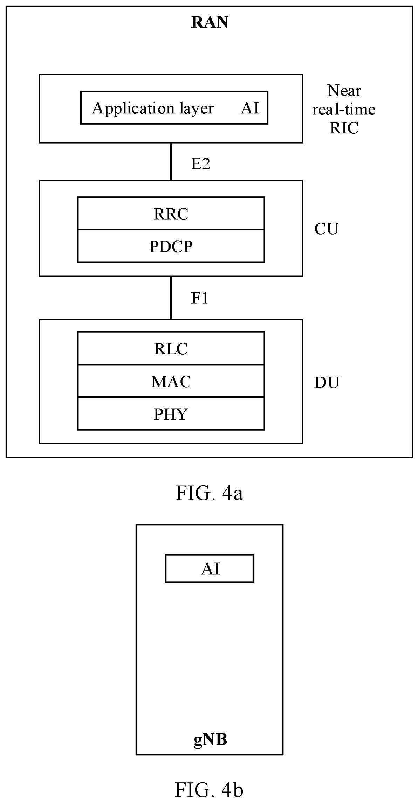

For these changes, the O-RAN Alliance proposes a new RAN architecture in a released whitepaper, as shown in FIG. 4a. The RAN architecture includes a near real-time radio access network intelligent controller (near real-time RAN intelligent controller, near-RT RIC), a CU, and a DU. The DU implements functions of RLC, MAC, and RLC layers. The CU implements functions of RRC and PDCP layers. The near real-time RIC implements a function of an application layer (app layer). In an O-RAN architecture, an AI function is implemented in the near real-time RIC. The near real-time RIC may include functions such as radio connection management, mobility management, QoS management, interference management, and an artificial intelligence training model. The functions of the protocol layers implemented by the CU and the DU in FIG. 4a are merely examples.

Compared with a current RAN architecture in 3 GPP, in the open RAN architecture proposed by O-RAN, the near real-time near-RT RIC and an E2 interface are added to a RAN. The CU and the DU may be connected through an F1 interface, and the near real-time RIC and the CU may be connected through the E2 interface.

As shown in FIG. 4a, the AI function is implemented in the near real-time RIC. In some other possible implementations, the AI function may alternatively be implemented in another part.

For example, as shown in FIG. 4b, the AI function is implemented in a network device gNB.

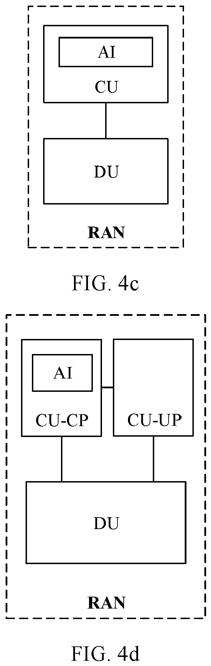

If an access network node is in a CU/DU split architecture, as shown in FIG. 4c, the AI function is usually implemented in a CU, or may be implemented in a DU, or even both the CU and the DU have the AI function.

If the access network node is in a CU/DU and CP/UP split architecture, as shown in FIG. 4d, the AI function is usually implemented in a CU-CP, or may be implemented in a DU, or even both the CU-CP and the DU have the AI function. The following describes a machine learning process.

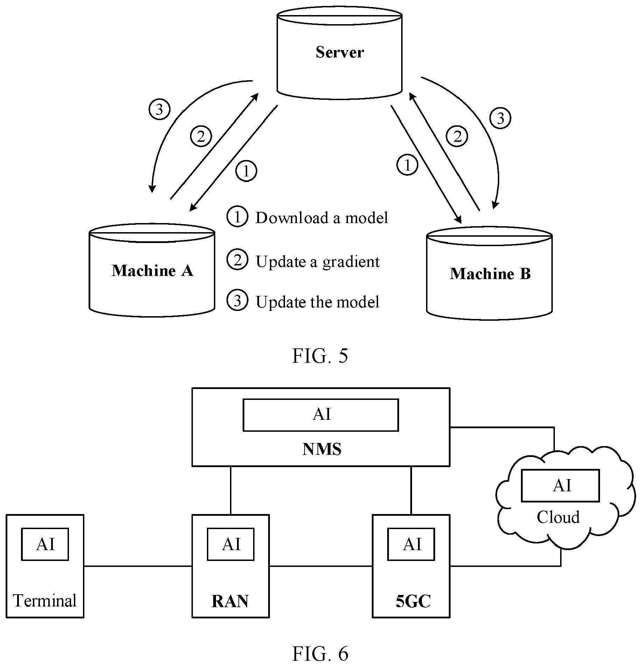

In conventional machine learning modeling, data required for training a model is usually aggregated to a data center, then the model is trained, and prediction is performed next. In addition to such centralized machine learning, there is distributed machine learning with federated learning as a typical example. Federated learning is classified into horizontal federated learning and vertical federated learning. As shown in FIG. 5, in horizontal federated learning, each machine downloads a model from a server, then trains the model by using local data, and next returns an updated parameter (or gradient) to the server after encryption. The server aggregates the parameters returned by the machines, updates the model, and feeds back a latest model to each machine. Horizontal federated learning is applicable to a scenario in which participants have a same service status but different target customers, for example, between different RANs of a same core network, or between different terminals of a same RAN. Vertical federated learning is applicable to a scenario in which there are more overlapping users but fewer overlapping features, for example, between a supermarket and a bank, or between a radio access network and a core network in a mobile network.

In this embodiment of this application, a device deployed with the AI function needs to obtain measurement information collected by a terminal, to perform machine learning. This embodiment of this application is applicable to both conventional machine learning and federated learning. If this embodiment of this application is applied to the conventional machine learning, the device with the AI function obtains the measurement information collected by the terminal. If this embodiment of this application is applied to the federated learning, the device with the AI function may obtain data obtained after the measurement information collected by the terminal is processed, that is, a model gradient.

This embodiment of this application is further applicable to a multi-layer AI function deployment scenario. For example, as shown in FIG. 6, the AI function may be deployed in all of a cloud (cloud), a network management system (network management system, NMS), a fifth generation core network (5th generation core network, 5GC), a RAN, and a terminal. In the multi-layer AI function deployment scenario, a protocol layer of cloud AI is generally the highest. A machine learning model trained by the cloud AI may be output to the NMS and the 5GC as an initial model or a model update basis for machine learning of the NMS and the 5GC. A machine learning model of the NMS may be used as a model input for machine learning of the 5GC and the RAN. Further, a machine learning model of the RAN may be used as a model input of machine learning of the terminal. On the contrary, NMS/5GC AI provides data required for machine learning or a model gradient in federated learning for the cloud AI, 5GC/RAN AI provides data required for machine learning or a model gradient in federated learning for NMS AI, and terminal AI provides data required for machine learning or a model gradient in federated learning for RAN AI. The foregoing layer relationship is only an example. This is not limited during actual application.

With reference to the RAN intelligentization scenario and based on the descriptions of the foregoing method embodiment, the following further describes in detail a measurement information sending method and the measurement information collection method provided in embodiments of this application.

In the RAN intelligentization scenario, a device deployed with an AI function needs to perform machine learning, and needs to perform machine learning by collecting measurement information collected by a terminal. In this scenario, configuration information may further include a machine learning model. The configuration information may further include a machine learning algorithm. The configuration information may further include some other information of machine learning. The measurement information reported by the terminal may include information used for machine learning. In a federated learning scenario, configuration information delivered by a network side includes a configuration related to federated learning. After determining that measurement information needs to be collected, a terminal performs gradient calculation for federated learning. The measurement information reported by the terminal may include a gradient used for federated learning, that is, the foregoing model gradient.

If the architecture shown in FIG. 4b is used for AI deployment, that is, an AI function is deployed in an integrated gNB device, the RAN intelligentization scenario may be applied with reference to the foregoing method embodiment. If the architecture shown in FIG. 4a is used for AI deployment, the network device in the foregoing method embodiment may be a DU, and the DU performs the operations of the network device. The following describes in detail the operations performed by the CU and the near real-time RIC, and some optional method implementation details in this scenario.

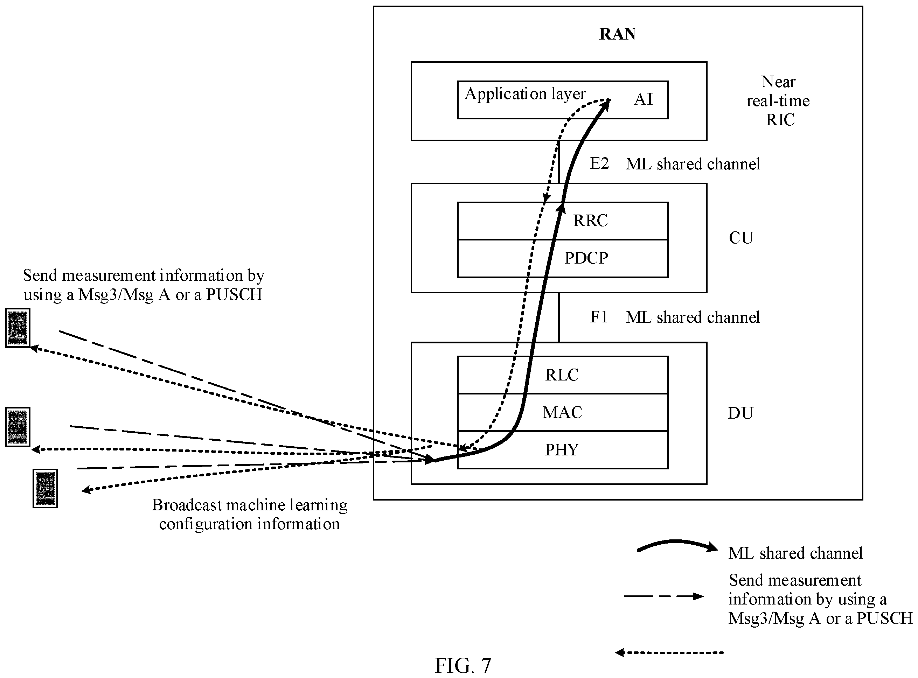

As shown in FIG. 7, based on the architecture shown in FIG. 4a, a near real-time RIC sends configuration information to a CU. The configuration information in this scenario may be referred to as machine learning configuration information or AI configuration information. The CU sends the configuration information to a DU. The DU may send the configuration information to a terminal in a broadcast manner. Refer to related step descriptions of the foregoing embodiment in FIG. 2. The configuration information includes a common channel resource, used to transmit measurement information. After receiving the configuration information, the terminal sends the measurement information to the DU on the common channel resource. The terminal may send the measurement information by using a message 3 (Msg3), a message A (MsgA), or a PUSCH. For details, refer to related step descriptions of the foregoing embodiment in FIG. 2.

After receiving the measurement information, the DU sends the measurement information to the CU, and the CU sends the measurement information to the near real-time RIC.

In this way, the near real-time RIC may perform machine learning based on the measurement information. Optionally, before the measurement information is transmitted from the DU to the CU, and from the CU to the near real-time RIC, an ML shared channel may be established, and the ML shared channel is specially used to transmit the measurement information.

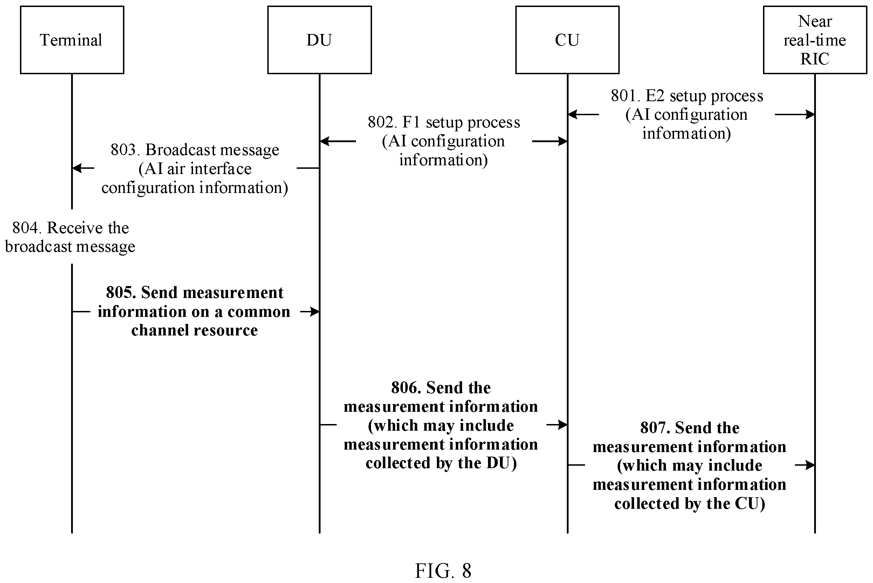

Based on the foregoing descriptions, as shown in FIG. 8, the following further describes in detail a measurement information reporting method and a measurement information collection method in an architecture including a near real-time RIC, a CU, and a DU.

S801. Perform an E2 setup (setup) process between the near real-time RIC and the CU.

The E2 setup process is used for information exchange between the near-RT RIC and the CU. In this process, the CU sends an E2 setup request (E2 setup request) message to the near-RT RIC first, and then the near-RT RIC returns an E2 setup response (E2 setup response) message to the CU. The information exchange between the near-RT RIC and the CU is completed by using the two messages. The E2 setup request message includes at least identifier information or name information of the CU. The E2 setup response message includes at least AI configuration information.

The AI configuration information includes one or more sets of AI configurations. Each set of AI configurations corresponds to one AI instance (AI instance). Each set of AI configurations includes at least AI enabling information. The AI enabling information is used to indicate whether the near real-time RIC or a higher-layer network (an NMS or a 5GC) enables an AI function. The AI enabling information may be a Boolean value or an enumerated value. If the AI configuration information includes a plurality of sets of AI configurations, the AI configuration information further includes an AI index. The AI index is used to indicate an index of each set of AI configurations, to distinguish different AI instances. The AI configuration information may include the AI index to implicitly indicate AI enabling. In this case, an explicit AI enabling indication is not required. If the AI configuration information includes only one set of AI configurations, the AI configuration information may not include the AI index. However, to add another AI configuration subsequently, the AI configuration information may also include the AI index to distinguish different AI instances.

The AI configuration information may include any one or more items included in the configuration information in the embodiment in FIG. 2.

For example, the AI configuration information includes a measurement item that may be denoted as a terminal measurement item and that is used to indicate information that a terminal needs to measure. Optionally, the AI configuration information may further include a base station measurement item. The AI configuration information may include one or two of the terminal measurement item and the base station measurement item. When including the base station measurement item, the AI configuration information is used to indicate information that the CU or the DU needs to measure. Configuration information broadcast by the DU to the terminal does not need to carry the base station measurement item. The base station measurement item may include uplink and downlink throughputs of each cell or area, uplink and downlink packet loss rates of each cell or area or service, a downlink sending delay of each service or each UE type or each area, or the like.

For another example, the AI configuration information includes an interval of sending the measurement information that is used to indicate how often the terminal sends the measurement information to the DU, or may indicate how often the CU sends the measurement information to the near real-time RIC.

S802. Perform an F1 setup (setup) process between the CU and the DU.

In this step, an F1 setup process in the technical specification TS 38.473 in 3GPP Release 15 (Release 15) may be reused for information exchange between the CU and the DU.

In this process, the DU sends an F1 setup request message to the CU first, and then the CU returns an F1 setup response message to the DU. The information exchange between the CU and the DU is completed by using the two messages. Content included in the F1 setup request message is similar to that of an F1 setup request message in the F1 setup process in the 3GPP protocol specification TS 38.473 v15.7.0, and includes at least identifier information or name information of the DU and subordinate cell list information of the DU. Content of the F1 setup response message is similar to that of an F1 setup response message in the F1 setup process in the 3GPP protocol specification TS 38.473 v15.7.0, includes at least an activated cell list and system information, and may further include information such as an available PLMN list and a RAN area code.

According to an NR protocol specification in 3GPP Release 15 (Release 15), the RAN area code is used to identify a RAN area to which the DU or a subordinate cell of the DU belongs. After moving to a new cell, UE in an RRC_INACTIVE state determines, based on a RAN area code of the cell, whether to initiate an RRC connection resume process.

The F1 setup response message further includes the AI configuration information.

The DU obtains the AI configuration information hereto. In this embodiment, it is assumed that the AI configuration information is generated and delivered to the CU by the near real-time RIC, and delivered by the CU to the DU. This is not limited during actual application, and both the CU and the DU may generate a part of the AI configuration information. For example, the CU or the DU generates a terminal selection factor.

It should be noted that, if there is an interface between the near real-time RIC and the DU, the DU may directly obtain the AI configuration information from the near real-time RIC through the interface, and does not need to obtain the AI configuration information through forwarding by the CU as in S801 and S802. In this case, the AI configuration information transmitted through the interface is similar to that in S801, and details are not described herein again. S803. The DU sends a broadcast message.

The broadcast message includes AI air interface configuration information. The AI air interface configuration information includes information about a common channel resource. The common channel resource is used to transmit the measurement information, that is, the common channel resource is used by the terminal to report the measurement information. The AI air interface configuration information may further include a parameter in the AI configuration information, but may not include the base station measurement item.

The broadcast message may be system information (system information, SI).

The AI air interface configuration information in this step has a same meaning as the configuration information in S201. For operations performed by the DU, refer to the operations performed by the network device in the embodiment in FIG. 2.

Some optional implementations are supplemented for description.

The DU broadcasts the AI air interface configuration information in a specific subordinate cell of the DU based on area range information included in the AI configuration information received from the CU. If no area range is configured in the AI configuration information, the AI air interface configuration information is broadcast in all activated cells.

The AI configuration information may include an applicable slice or slice list. If the AI configuration information includes a plurality of AI configurations, and slices or slice lists applicable to all the AI configurations are not completely the same, an applicable slice or slice list may be specified for each AI configuration. For this specifying manner, the DU further determines, based on slice information supported by each cell, AI air interface configuration information to be broadcast in specific cells. The slice information supported by each cell may be preset in the DU, or may be obtained by using the CU, the near real-time RIC, or the NMS.

If the AI configuration information includes a plurality of AI configurations, the common channel resource may be applied to the plurality of AI configurations, or the common channel resource is in one-to-one correspondence with the AI configuration. A set of common channel resource is allocated to each AI configuration. Alternatively, a set of common channel resource is shared by some of the plurality of AI configurations.

If the common channel resource is a PRACH resource, the common channel resource may be further limited in code domain. For example, a first AI instance uses RACH preambles with indexes of 0 to 7 to collect the reported measurement information, and a second AI instance uses RACH preambles with indexes of 8 to 15 to collect the reported measurement information.

S804. The terminal receives the broadcast message from the DU.

S805. The terminal sends the measurement information to the DU on the common channel resource. The DU receives the measurement information on the common channel resource. The measurement information does not carry an identifier of the terminal.

For S804 and S805, refer to the descriptions of S202 and S203. For some other operations performed by the terminal, refer to the descriptions of the embodiment in FIG. 2. The network device in the embodiment in FIG. 2 is the DU in this embodiment. Details are not described herein again.

S806. The DU sends the measurement information to the CU. The DU receives the measurement information from the CU.

After the DU receives the measurement information reported by the terminal, or based on an indication of the CU, or based on self-determining (for example, a timer expires or a specific quantity of measurement information is collected), the DU sends measurement information to the CU by using an uplink AI data transfer (for example, UL AI data transfer) message agreed in a protocol. It should be noted that the measurement information sent by the DU to the CU may include the measurement information received by the DU from the terminal, or may include measurement information collected by the DU, for example, measurement information collected by the DU based on a base station measurement item delivered by the CU.

Optionally, the uplink AI data transfer message includes AI index information, to indicate an AI instance whose measurement information is delivered. The uplink AI data transfer message may be a newly defined message, or may reuse an uplink RRC message transfer (UL RRC message transfer) message in TS38.473 vf41. If the UL RRC message transfer message in TS38.473 vf41 is reused, a specific gNB-CU UE F1AP ID and/or a specific gNB-DU UE F1AP ID need/needs to be agreed, and the gNB-CU UE F1AP ID and/or the gNB-DU UE F1AP ID are/is used to indicate that the gNB-CU UE F1AP ID and/or the gNB-DU UE F1AP ID are/is a target ID and a source-side ID for delivering uplink AI measurement information.

S807. The CU sends the measurement information to the near real-time RIC. The near real-time RIC receives the measurement information from the CU.

Similarly, after the CU receives the measurement information reported by the DU, or based on an indication of the near real-time RIC, or based on self-determining (for example, a timer expires or a specific quantity of data is collected), the CU sends measurement information to the near real-time RIC by using an uplink AI data transfer (for example, UL AI data transfer) message agreed in a protocol. It should be noted herein that the measurement information sent by the CU to the near real-time RIC may include the measurement information received by the CU from the DU, or may include measurement information collected by the CU, for example, measurement information collected by the CU based on a base station measurement item delivered by the near real-time RIC.

Optionally, the uplink AI data transfer message includes AI index information, to indicate an AI instance whose measurement information is delivered. For the uplink AI data transfer message, refer to the foregoing descriptions.

It should be noted that, if there is an interface between the near real-time RIC and the DU, the DU may directly send the measurement information to the near real-time RIC through the interface, and does not need to send the measurement information through forwarding by the CU as in S806 and S807. In this case, the measurement information exchanged through the interface is similar to that in S806, and details are not described herein again.

In the embodiment shown in FIG. 8, AI configuration is performed in the F1 and E2 establishment processes, and the AI air interface configuration information is broadcast through an air interface, so that AI measurement information collection can be quickly started. Further, broadcasting the common channel resource helps implement anonymous reporting of the measurement information, to ensure that privacy of the terminal is not disclosed.

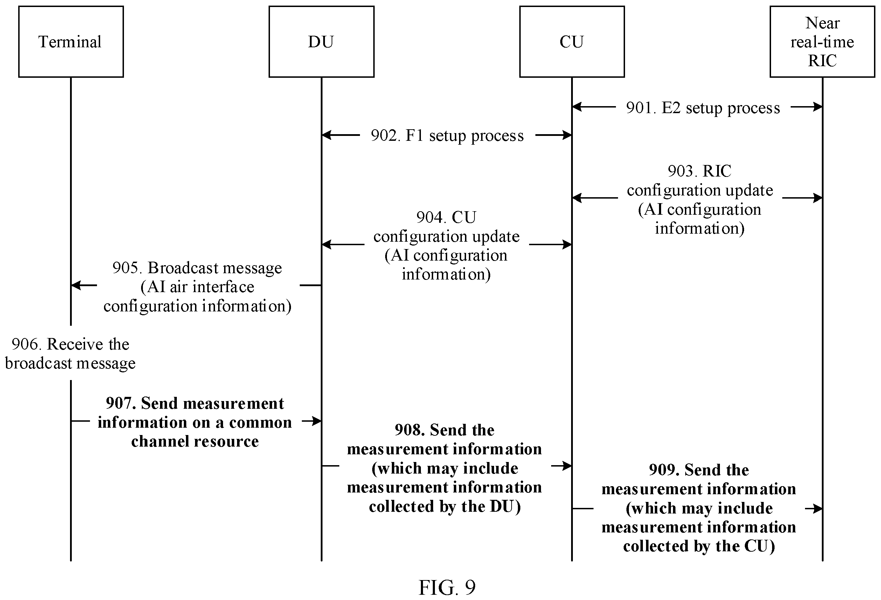

Based on a same technical concept, as shown in FIG. 9, the following describes in detail another embodiment of a measurement information reporting method and a measurement information collection method in an architecture including a near real-time RIC, a CU, and a DU.

S901. Perform an E2 setup (setup) process between the near real-time RIC and the CU.

This process is used for information exchange between the near-RT RIC and the CU. In this process, the CU sends an E2 setup request message to the near-RT RIC first, and then the near-RT RIC returns an E2 setup response message to the CU. The information exchange between the near-RT RIC and the CU is completed by using the two messages. The E2 setup request message includes at least identifier information or name information of the CU.

S902. Perform an F1 setup (setup) process between the CU and the DU.

For this step, refer to the descriptions of S802. A difference lies in that the F1 setup response message does not include AI configuration information.

S903. Perform an RIC configuration update (RIC configuration update) process between the near real-time RIC and the CU.

The near-RT RIC sends an RIC configuration update message to the CU, where the message includes the AI configuration information. After receiving the RIC configuration update message and processing the RIC configuration update message, the CU feeds back an RIC configuration update response message to the near-RT RIC, for example, an RIC configuration update acknowledgment (ACK) message.

For the AI configuration information, refer to the descriptions of the embodiment in FIG. 8.

S904. Perform a CU configuration update (configuration update) process between the CU and the DU.

The CU sends a gNB-CU configuration update message to the DU, where the message includes the AI configuration information. After receiving the gNB-CU configuration update message and processing the gNB-CU configuration update message, the DU returns a gNB-CU configuration update ACK message to the CU.

For the AI configuration information, refer to the descriptions of the embodiment in FIG. 8.

S905 to S909 are the same as S803 to S807.

In the embodiment shown in FIG. 9, AI configuration is performed in an E2/F1 configuration update process, so that AI measurement information collection can be configured after a CU/DU device is started. This has better flexibility. Further, broadcasting the common channel resource helps implement anonymous reporting of the measurement information, to ensure that privacy of the terminal is not disclosed.

It can be learned that the technical concept of the embodiment in FIG. 9 is the same as that of the embodiment in FIG. 8, and a difference lies in that in the embodiment in FIG. 8, the AI configuration information is delivered through the E2 setup process and the FI setup process, but in the embodiment in FIG. 9, the AI configuration information is delivered through the RIC configuration update process and the CU configuration update process. It may be understood that the embodiments in FIG. 8 and FIG. 9 may be used in combination. For example, initial AI configuration information is delivered in the E2 setup process and the FI setup process, and the AI configuration information is updated in the RIC configuration update process and the CU configuration update process.

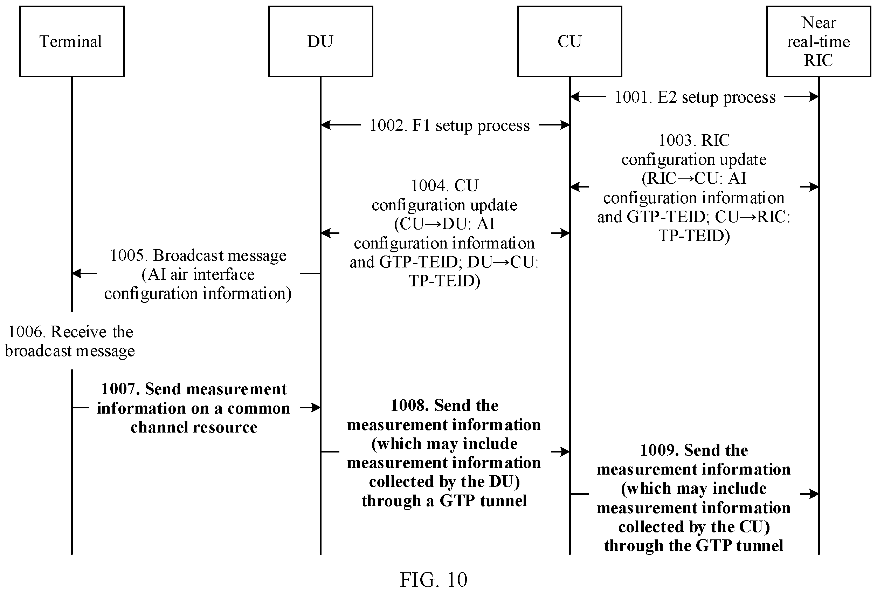

It can be learned that in the embodiments in FIG. 8 and FIG. 9, the measurement information is transmitted by using signaling. Alternatively, a tunnel may be established to transmit the measurement information. For details, refer to an embodiment shown in FIG. 10.

Based on a same technical concept, as shown in FIG. 10, the following describes in detail another embodiment of a measurement information reporting method and a measurement information collection method in an architecture including a near real-time RIC, a CU, and a DU.

S1001. Perform an E2 setup (setup) process between the near real-time RIC and the CU.

This step is the same as S901.

S1002. Perform an F1 setup (setup) process between the CU and the DU.

This step is the same as S902.

S1003. Perform an RIC configuration update (RIC configuration update) process between the near real-time RIC and the CU.

The near-RT RIC sends an RIC configuration update message to the CU, where the message includes AI configuration information. After receiving the RIC configuration update message and processing the RIC configuration update message, the CU feeds back an RIC configuration update response message to the near-RT RIC, for example, an RIC configuration update acknowledgment (ACK) message.

The RIC configuration update message may further include an E2 RIC general packet radio service tunneling protocol (general packet radio service tunneling protocol, GTP)-tunnel endpoint identifier (tunnel endpoint identifier, TEID), the E2 RIC GTP-TEID is used to identify an endpoint of a tunnel on the near real-time RIC, and the tunnel is used to transmit the measurement information on an E2 interface. This may be alternatively described as that the AI configuration information further includes the E2 RIC GTP-TEID.

The entire AI configuration information may correspond to one E2 RIC GTP-TEID, or each set of AI configurations may correspond to one E2 RIC GTP-TEID. Optionally, it may be agreed that an E2 RIC GTP-TEID of each set of AI configurations is always the same as an index of the set of AI configurations. In this case, the AI configuration information includes only the E2 RIC GTP-TEID of the AI configuration or the index of the AI configuration.

After receiving the RIC configuration update message, the CU allocates a CU-side tunnel endpoint identifier E2 CU GTP-TEID to a GTP-U tunnel corresponding to each E2 RIC GTP-TEID, and feeds back the E2 CU GTP-TEID to the near-RT RIC by using the RIC configuration update ACK message.

S1004. Perform a CU configuration update (configuration update) process between the CU and the DU.

The CU sends a gNB-CU configuration update message to the DU, where the message includes the AI configuration information. After receiving the gNB-CU configuration update message and processing the gNB-CU configuration update message, the DU returns a gNB-CU configuration update ACK message to the CU.

The gNB-CU configuration update message may further include an F1 CU GTP-TEID, used to identify an endpoint of a tunnel on the CU, and the tunnel is used to transmit the measurement information on an F1 interface. This may be alternatively described as that the AI configuration information further includes the F1 CU GTP-TEID.

The entire AI configuration information may correspond to one F1 CU GTP-TEID, or each set of AI configurations may correspond to one F1 CU GTP-TEID. Optionally, it may be agreed that an F1 CU GTP-TEID of each set of AI configurations is always the same as an index of the set of AI configurations. In this case, the AI configuration information includes only the F1 CU GTP-TEID of the AI configuration or the index of the AI configuration.

After receiving the gNB-CU configuration update message, the DU allocates a CU-side tunnel endpoint identifier F1 DU GTP-TEID to a GTP-U tunnel corresponding to each F1 CU GTP-TEID, and feeds back the F1 DU GTP-TEID to the CU by using the gNB-CU configuration update ACK message.

S1005 is the same as S905 or S803.

S1006 is the same as S906 or S804.

S1007 is the same as S907 or S805.

S1008. The DU sends the measurement information to the CU. The DU receives the measurement information from the CU.

For this step, refer to the descriptions of S806.

For this step, the following descriptions may be further supplemented:
The DU sends the measurement information to the CU through a GTP tunnel with "the F1 CU GTP-TEID as a destination address and the F1 DU GTP-TEID as a source address". Optionally, an uplink AI data transfer message includes AI index information to indicate an AI instance whose data is delivered. If each AI instance corresponds to a pair of F1 CU GTP-TEID and F1 DU GTP-TEID, a tunnel corresponding to an AI instance with measurement information to be reported is used to send the measurement information.

S1009. The CU sends the measurement information to the near real-time RIC. The near real-time RIC receives the measurement information from the CU.

For this step, refer to the descriptions of S807.

For this step, the following descriptions may be further supplemented:
The CU sends measurement information collected by the CU and/or a subordinate DU and/or a subordinate terminal to the near real-time RIC through a GTP tunnel with "the E2 RIC GTP-TEID as a destination address and the E2 CU GTP-TEID as a source address". If each AI instance corresponds to one E2 GTP-U tunnel, a tunnel corresponding to an AI instance with measurement information to be reported is used to send the measurement information.

In the embodiment shown in FIG. 10, the AI configuration information is delivered in an E2/F1 configuration update process, so that AI measurement information collection can be configured after a CU/DU device is started. This has better flexibility. Compared with transmitting the measurement information by using signaling, transmitting the measurement information through the GTP-U tunnels on the E2 interface and the F1 interface can support a larger data amount. Further, broadcasting the common channel resource helps implement anonymous reporting of the measurement information, to ensure that privacy of the terminal is not disclosed.

In the embodiment shown in FIG. 10, the AI configuration information is delivered in the E2/F1 configuration update process. It may be understood that, based on the fact that the measurement information is transmitted through the GTP-U tunnels on the E2 interface and the F1 interface in the embodiment in FIG. 10, the AI configuration information may alternatively be delivered in the E2 setup process and the FI setup process. Alternatively, the two manners may be combined. For example, initial AI configuration information is delivered in the E2 setup process and the FI setup process, and the AI configuration information is updated in the RIC configuration update process and the CU configuration update process.

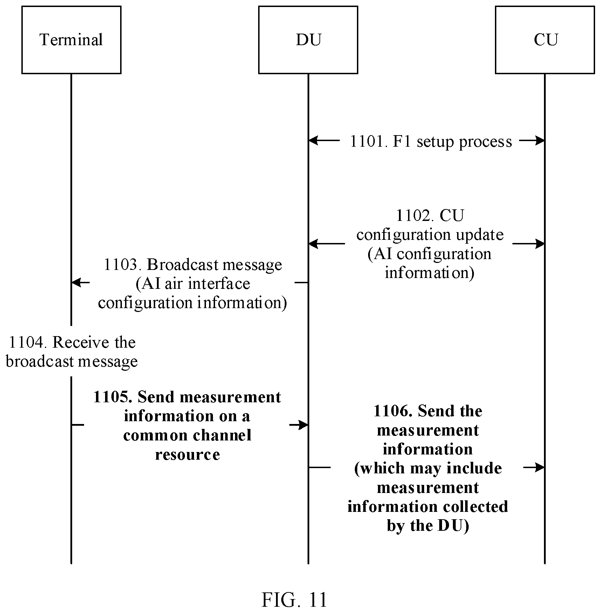

In conclusion, FIG. 8, FIG. 9, and FIG. 10 describe the measurement information reporting method and the measurement information collection method in the architecture including the near real-time RIC, the CU, and the DU. Based on a same technical concept, as shown in FIG. 11, the following describes a measurement information reporting method and a measurement information collection method in an architecture including a CU and a DU.

S1101. Perform an F1 setup (setup) process between the CU and the DU.

For this step, refer to the descriptions of S802. An F1 setup response message may include AI configuration information, or may not include AI configuration information.

S1102. Perform a CU configuration update (configuration update) process between the CU and the DU.

For this step, refer to the descriptions of S904.

The CU sends a gNB-CU configuration update message to the DU, where the message includes the AI configuration information.

If the F1 setup response message in S1101 includes the AI configuration information, the gNB-CU configuration update message in this step may not include the AI configuration information.

Alternatively, both the F1 setup response message and the gNB-CU configuration update message include the AI configuration information.

S1103 is the same as S803.

S1104 is the same as S804.

S1105 is the same as S805.

S1106 is the same as S806.

It can be learned that in the embodiment in FIG. 11, measurement information is transmitted by using signaling.

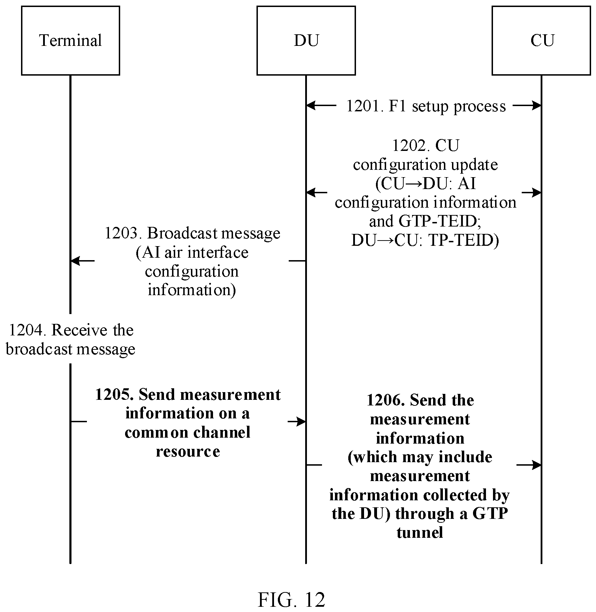

Alternatively, a tunnel may be established to transmit the measurement information. For details, refer to an embodiment shown in FIG. 12.

Based on a same technical concept, as shown in FIG. 12, the following describes in detail another embodiment of a measurement information reporting method and a measurement information collection method in an architecture including a CU and a DU.

S1201. Perform an F1 setup (setup) process between the CU and the DU.

For this step, refer to the descriptions of S 1002.

S1202. Perform a CU configuration update (configuration update) process between the CU and the DU.

This step is the same as S 1004. Refer to the descriptions of S 1004.

S1203 to S1206 are the same as S1005 to S1008.

It should be noted that, in the foregoing embodiment, configuration information is carried and a tunnel is established in an F1/E2 configuration update process. During actual application, alternatively, the configuration information may be carried and the tunnel may be established in the F1/E2 setup process.

Based on the foregoing embodiment, a broadcast message is used to send configuration information including an uplink common channel resource. This is vulnerable to a malicious attack, for example, a distributed denial of service (Distributed Denial of Service, DDoS) attack from a malicious terminal, that is, the malicious terminal continuously sends data by using the uplink common channel resource. Consequently, memory and/or computing resources of a server at a measurement information receive end are quickly exhausted, and a service cannot be provided.

To avoid the DDoS attack, the configuration information may be encrypted, so that the malicious terminal cannot obtain the configuration information of the common channel resource, and the malicious terminal cannot correctly use the common channel resource to send uplink data. An authorized terminal may obtain a corresponding decryption key after registering with a mobile network, from a default setting, or in another manner. For the manner in which the terminal obtains the key after registering with the network, once the terminal obtains the key, the terminal can obtain the configuration information by using the key in a deregistration state, and does not need to remain in a registration state.

Optionally, the terminal may alternatively encrypt the reported measurement information by using the key. The configuration information, especially the common channel resource in the configuration information, is usually generated by the DU. However, in a current 3GPP system, the DU does not include an encryption function. A possible solution is to introduce the encryption function into the DU, for example, introduce a PDCP layer, to perform encryption processing on the configuration information at the PDCP layer. Another possible solution is to add a new process between the CU and the DU. The DU sends the generated configuration information to the CU, the CU encrypts the configuration information and returns the encrypted configuration information to the DU, and the DU broadcasts the configuration information on an air interface.

The foregoing methods for preventing the DDoS attack cannot be well applied to terminals that do not register with a network, for example, a water meter, a sensor, or a logistics electronic label. For such terminals, a method for preventing the DDoS attack is to allocate a specific dedicated identifier to each of the terminals at delivery, and the dedicated identifier carries verification information. A network device learns of a verification algorithm in advance, and the terminal includes the dedicated identifier when reporting measurement information. After receiving the dedicated identifier, the network device determines, by using the verification algorithm, whether the measurement information is reported by an authorized terminal. If determining that the measurement information is not reported by an authorized terminal, the network device determines to discard the measurement information.

It should be noted that the examples in the application scenarios in this application merely show some possible implementations, to help better understand and describe the measurement information reporting method and the measurement information collection method in this application. Persons skilled in the art may obtain examples of some evolution forms based on the methods provided in this application.

In the foregoing embodiments provided in this application, the methods provided in embodiments of this application are separately described from perspectives of the network device, the terminal, the CU, the near real-time RIC, and interaction between the devices. To implement functions in the foregoing methods provided in embodiments of this application, the network device and the terminal may include a hardware structure and/or a software module, and implement the foregoing functions in a form of the hardware structure, the software module, or a combination of the hardware structure and the software module. Whether a specific function in the foregoing functions is performed by using the hardware structure, the software module, or the combination of the hardware structure and the software module depends on specific application and design constraints of technical solutions.

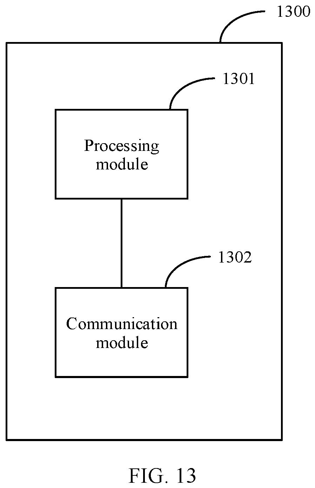

As shown in FIG. 13, based on a same technical concept, an embodiment of this application further provides an apparatus 1300. The apparatus 1300 may be a terminal, a network device, a CU, or a near real-time RIC, an apparatus in each terminal, network device, CU, or near real-time RIC, or an apparatus that can be used in cooperation with the terminal, the network device, the CU, or the near real-time RIC. In a design, the apparatus 1300 may include modules that are in one-to-one correspondence with the methods/operations/steps/actions performed by the terminal, the network device, the CU, or the near real-time RIC in the foregoing method embodiments. The modules may be implemented by a hardware circuit, software, or a combination of a hardware circuit and software. In a design, the apparatus may include a processing module 1301 and a communication module 1302. The processing module 1301 is configured to invoke the communication module 1302 to perform a receiving function and/or a sending function.

When being configured to perform the method performed by the terminal,
the processing module 1301 is configured to invoke the communication module 1302 to specifically perform the following operations: receiving a broadcast message from a network device, where the broadcast message includes configuration information, the configuration information includes information about a common channel resource, and the common channel resource is used to transmit measurement information; and sending the measurement information to the network device on the common channel resource.

Optionally, when the processing module 1301 invokes the communication module 1302 to report the measurement information, an identifier of the terminal is not carried. The identifier may be any information that can identify the terminal, for example, a terminal ID. In this way, it is further ensured that the network device cannot obtain privacy of the terminal, to ensure that privacy of the terminal is not disclosed.

Optionally, the configuration information further includes a determining parameter, and the determining parameter is used by the terminal to determine whether the measurement information needs to be collected.

The determining parameter may include one or a combination of the following: an area range, a service type, a slice, a slice list, a terminal type, or a terminal selection factor that is applicable to the configuration information.

The processing module 1301 is further configured to determine, based on the determining parameter and a status parameter of the terminal, that the measurement information needs to be collected, where the status parameter of the terminal includes one or a combination of the following: a location of the terminal, a service performed by the terminal, a slice to which the service performed by the terminal belongs, a capability of the terminal, or a random number generated by the terminal.

When being configured to perform the method performed by the network device,
the processing module 1301 is configured to invoke the communication module 1302 to specifically perform the following operations: sending a broadcast message, where the broadcast message includes configuration information, the configuration information includes information about a common channel resource, and the common channel resource is used to transmit measurement information; and receiving the measurement information on the common channel resource.

The network device may be a gNB, or may be a DU.

When the network device is the DU, the processing module 1301 is further configured to invoke the communication module 1302 to receive a first message from a centralized unit CU, where the first message includes the configuration information.

Optionally, the first message further includes a first general packet radio service tunneling protocol GTP-tunnel endpoint identifier, the first GTP-tunnel endpoint identifier is used to identify an endpoint of a tunnel on the CU, and the tunnel is used to transmit the measurement information on an F1 interface. The processing module 1301 is further configured to determine a second GTP-tunnel endpoint identifier based on the first GTP-tunnel endpoint identifier, and invoke the communication module 1302 to send the second GTP-tunnel endpoint identifier to the CU, where the second GTP-tunnel endpoint identifier is used to identify an endpoint of the tunnel on the DU, and the tunnel is used to transmit the measurement information on the F1 interface. In this way, the tunnel for transmitting the measurement information between the CU and the DU can be established. Compared with transmitting the measurement information by using signaling, transmitting the measurement information through the tunnel on the F1 interface can support a larger data amount.

Optionally, the processing module 1301 is further configured to invoke the communication module 1302 to send the measurement information to the CU, where the measurement information includes the first GTP-tunnel endpoint identifier and the second GTP-tunnel endpoint identifier.

When being configured to perform the method performed by the CU,
the processing module is configured to invoke the communication module to send a first message to a distributed unit DU, where the first message includes configuration information, the configuration information includes information about a common channel resource, and the common channel resource is used to transmit measurement information; and receive the measurement information from the DU, where the measurement information includes measurement information that is received by the DU on the common channel resource and that is from a terminal device.

Optionally, the measurement information includes measurement information collected by the DU.

The first message further includes a first GTP-tunnel endpoint identifier, the first GTP-tunnel endpoint identifier is used to identify an endpoint of a tunnel on the CU, and the tunnel is used to transmit the measurement information on an F1 interface. The processing module 1301 is further configured to invoke the communication module 1302 to receive a second GTP-tunnel endpoint identifier from the DU, where the second GTP-tunnel endpoint identifier is used to identify an endpoint of the tunnel on the DU, and the tunnel is used to transmit the measurement information on the F1 interface.

Optionally, before the first message is sent to the distributed unit DU, the processing module 1301 is further configured to invoke the communication module 1302 to receive a second message from a near real-time RIC, where the second message includes the configuration information, to provide more possible manners of generating the configuration information.

Optionally, the processing module 1301 is further configured to invoke the communication module 1302 to send the measurement information to the near real-time RIC.

Optionally, the second message further includes a third GTP-tunnel endpoint identifier, the third GTP-tunnel endpoint identifier is used to identify an endpoint of a tunnel on the near real-time RIC, and the tunnel is used to transmit the measurement information on an E2 interface. The method further includes: The CU determines a fourth GTP-tunnel endpoint identifier based on the third GTP-tunnel endpoint identifier, and the CU sends the fourth GTP-tunnel endpoint identifier to the RIC, where the fourth GTP-tunnel endpoint identifier is used to identify an endpoint of the tunnel on the CU, and the tunnel is used to transmit the measurement information on the E2 interface.

When being configured to perform the method performed by the near real-time RIC,
the processing module is configured to invoke the communication module to send a first message to a centralized unit CU, where the first message includes configuration information, the configuration information includes information about a common channel resource, and the common channel resource is used to transmit measurement information; and receive the measurement information from the CU, where the measurement information includes measurement information that is received by a distributed unit DU on the common channel resource and that is from a terminal device.

Optionally, the first message further includes a first GTP-tunnel endpoint identifier, the first GTP-tunnel endpoint identifier is used to identify an endpoint of a tunnel on the near real-time RIC, and the tunnel is used to transmit the measurement information on an E2 interface. The processing module 1301 is further configured to invoke the communication module 1302 to receive a second GTP-tunnel endpoint identifier from the CU, where the second GTP-tunnel endpoint identifier is used to identify an endpoint of the tunnel on the CU, and the tunnel is used to transmit the measurement information on the E2 interface.

Optionally, the first message is an E2 setup response message, and the configuration information is transmitted in an E2 setup process.

Optionally, the first message is a near real-time RIC configuration update response message.

When the apparatus 1300 performs the method performed by the terminal, the network device, the CU, or the near real-time RIC in the foregoing method embodiments,
optionally, the configuration information further includes a measurement item and/or an index value of the configuration information, and the index value of the configuration information is used to distinguish a plurality of sets of configuration information.

The measurement item may include one or a combination of the following: cell quality, beam quality, radio link failure information, connection setup failure information, an uplink sending delay, or signal strength.

Optionally, the configuration information further includes one or more of the following: a trigger condition for sending the measurement information, an interval of sending the measurement information, or a quantity of times of sending the measurement information, used to indicate when the terminal can report the measurement information. Optionally, the common channel resource includes one or a combination of the following: a random access resource and a physical uplink shared channel resource.

Optionally, the measurement information includes any one of the following: information used for machine learning, a gradient used for federated learning, cell quality, beam quality, radio link failure information, connection setup failure information, an uplink sending delay, or signal strength.

Optionally, the configuration information further includes a machine learning model and/or a machine learning algorithm.

In a possible design, the configuration information further includes a key. The configuration information is encrypted, so that a malicious terminal cannot obtain the configuration information of the common channel resource, and the malicious terminal cannot correctly use the common channel resource to send uplink data.

Optionally, the measurement information includes the key.

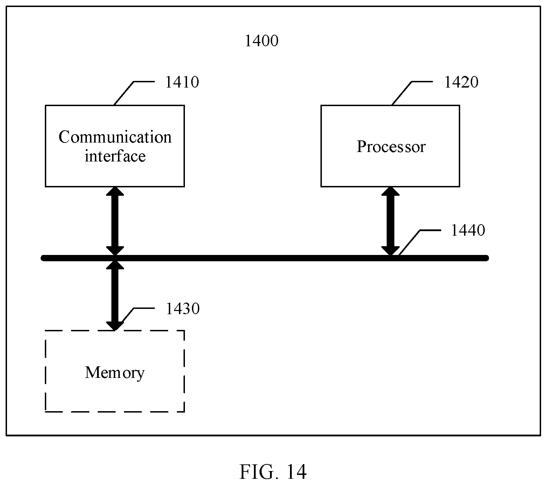

The processing module 1301 and the communication module 1302 may further perform another method performed by the terminal, the network device, the CU, or the near real-time RIC in the foregoing method embodiments. For details, refer to the descriptions of the foregoing method embodiments. Repeated parts are not described in detail again. FIG. 14 shows an apparatus 1400 according to an embodiment of this application, configured to implement functions of the terminal, the network device, the CU, or the near real-time RIC in the foregoing methods.

When the functions of the terminal are implemented, the apparatus may be a terminal, an apparatus in the terminal, or an apparatus that can be used in cooperation with the terminal.

When the functions of the network device are implemented, the apparatus may be a gNB or a DU, an apparatus in the gNB or the DU, or an apparatus that can be used in cooperation with the gNB or the DU.

When the functions of the CU are implemented, the apparatus may be a CU, an apparatus in the CU, or an apparatus that can be used in cooperation with the CU.

When the functions of the near real-time RIC are implemented, the apparatus may be a near real-time RIC, an apparatus in the near real-time RIC, or an apparatus that can be used in cooperation with the near real-time RIC. The apparatus may be a chip system. In this embodiment of this application, the chip system may include a chip, or may include a chip and another discrete device.

The apparatus 1400 includes at least one processor 1420, configured to implement the functions of the terminal, the network device, the CU, or the near real-time RIC in the methods provided in embodiments of this application.

The apparatus 1400 may further include a communication interface 1410. In this embodiment of this application, the communication interface may be a transceiver, a circuit, a bus, a module, or a communication interface of another type, and is configured to communicate with another device by using a transmission medium. For example, the communication interface 1410 is used by an apparatus in the apparatus 1400 to communicate with another device. For example, when the apparatus 1400 is the terminal, the another device may be the network device. When the apparatus 1400 is the network device, the another apparatus may be the terminal or the CU. When the apparatus 1400 is the CU, the another device may be the DU or the near real-time RIC. When the apparatus 1400 is the near real-time RIC, the another apparatus may be the CU.

The processor 1420 receives and sends data through the communication interface 1410, and is configured to implement the methods in the foregoing method embodiments. For example, when implementing the functions of the terminal, the processor 1420 is configured to: receive a broadcast message from a network device through the communication interface, where the broadcast message includes configuration information, the configuration information includes information about a common channel resource, and the common channel resource is used to transmit measurement information; and send the measurement information to the network device on the common channel resource.

When implementing the functions of the network device, the processor 1420 is configured to: send a broadcast message through the communication interface, where the broadcast message includes configuration information, the configuration information includes information about a common channel resource, and the common channel resource is used to transmit measurement information; and receive the measurement information on the common channel resource. The network device may be a gNB, or may be a DU.

When implementing the functions of the CU, the processor 1420 is configured to: send a first message to a distributed unit DU through the communication interface, where the first message includes configuration information, the configuration information includes information about a common channel resource, and the common channel resource is used to transmit measurement information; and receive the measurement information from the DU, where the measurement information includes measurement information that is received by the DU on the common channel resource and that is from a terminal device.

When implementing the functions of the real-time RIC, the processor 1420 is configured to: send a first message to a centralized unit CU through the communication interface, where the first message includes configuration information, the configuration information includes information about a common channel resource, and the common channel resource is used to transmit measurement information; and receive the measurement information from the CU, where the measurement information includes measurement information that is received by a distributed unit DU on the common channel resource and that is from a terminal device.

The processor 1420 and the communication interface 1410 may be further configured to perform another corresponding step or operation performed by the terminal, the network device, the CU, or the near real-time RIC in the foregoing method embodiments. Details are not described herein again.

The apparatus 1400 may further include at least one memory 1430, configured to store program instructions and/or data. The memory 1430 is coupled to the processor 1420. Coupling in this embodiment of this application is indirect coupling or a communication connection between apparatuses, units, or modules, and may be in an electrical, mechanical, or another form, and is used for information exchange between the apparatuses, units, or modules. The processor 1420 may operate with the memory 1430 together. The processor 1420 may execute the program instructions stored in the memory 1430. At least one of the at least one memory may be included in the processor.

A specific connection medium between the communication interface 1410, the processor 1420, and the memory 1430 is not limited in this embodiment of this application. In this embodiment of this application, in FIG. 14, the memory 1430, the processor 1420, and the communication interface 1410 are connected through a bus 1440. The bus is represented by a bold line in FIG. 14. A connection manner between other components is merely an example for description, and is not limited thereto. The bus may be classified into an address bus, a data bus, a control bus, or the like. For ease of representation, only one bold line is used to represent the bus in FIG. 14, but this does not mean that there is only one bus or only one type of bus.

When an apparatus 1200 and the apparatus 1400 are specifically chips or chip systems, a communication module 1202 and the communication interface 1410 may output or receive a baseband signal. When the apparatus 1200 and the apparatus 1400 are specifically devices, the communication module 1202 and the communication interface 1410 may output or receive a radio frequency signal. In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in the processor and a software module. In embodiments of this application, the memory 1430 may be a nonvolatile memory, such as a hard disk drive (hard disk drive, HDD) or a solid-state drive (solid-state drive, SSD), or may be a volatile memory (volatile memory), such as a random access memory (random access memory, RAM). The memory is any other medium that can be used to carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

Some or all of operations and functions performed by the terminal, the network device, the CU, or the near real-time RIC described in the foregoing method embodiments of this application may be implemented by using a chip or an integrated circuit.

To implement the functions of the apparatuses in FIG. 13 or FIG. 14, an embodiment of this application further provides a chip, including a processor, configured to support the apparatus 1300 or the apparatus 1400 in implementing the functions in the foregoing method embodiments. In a possible design, the chip is connected to a memory or the chip includes a memory, and the memory is configured to store program instructions and data that are necessary for the apparatus 1300 or the apparatus 1400.

An embodiment of this application provides a computer-readable storage medium that stores a computer program. The computer program includes instructions used to perform the foregoing method embodiments.

An embodiment of this application provides a computer program product including instructions. When the computer program product runs on a computer, the computer is enabled to perform the foregoing method embodiments.

Persons skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can instruct a computer or another programmable data processing device to work in a specific manner, so that instructions stored in the computer-readable memory generate an artifact that includes an instruction apparatus. The instruction apparatus implements a specific function in one or more processes in the flowcharts and/or in one or more blocks in the block diagrams. These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of this application have been described, persons skilled in the art can make changes and modifications to these embodiments once they learn a basic inventive concept. Therefore, the appended claims are intended to be construed as to cover the preferred embodiments and all changes and modifications falling within the scope of this application.

It is clear that persons skilled in the art can make various modifications and variations to embodiments of this application without departing from the spirit and scope of the embodiments of this application. In this way, this application is intended to cover these modifications and variations of embodiments of this application provided that they fall within the scope of the claims of this application and their equivalent technologies.

## Claims

1. A measurement information reporting method, comprising:
receiving, by a terminal, a broadcast message from a network device, wherein the broadcast message comprises configuration information, the configuration information comprises information about a common channel resource, and the common channel resource is used to transmit measurement information; and
sending, by the terminal, the measurement information to the network device on the common channel resource.

2. The method according to claim 1, wherein the configuration information further comprises a determining parameter, and the determining parameter is used by the terminal to determine whether the measurement information needs to be collected.

3. The method according to claim 2, wherein the determining parameter comprises one or a combination of the following: an area range, a service type, a slice, a slice list, a terminal type, or a terminal selection factor that is applicable to the configuration information.

4. The method according to claim 2 or 3, further comprising: determining, by the terminal based on the determining parameter and a status parameter of the terminal, that the measurement information needs to be collected, wherein the status parameter of the terminal comprises one or a combination of the following: a location of the terminal, a service performed by the terminal, a slice to which the service performed by the terminal belongs, a capability of the terminal, or a random number generated by the terminal.

5. A measurement information collection method, comprising:
sending, by a network device, a broadcast message, wherein the broadcast message comprises configuration information, the configuration information comprises information about a common channel resource, and the common channel resource is used to transmit measurement information; and
receiving, by the network device, the measurement information on the common channel resource.

6. The method according to claim 5, wherein the network device is a distributed unit DU, and the method further comprises:
receiving, by the DU, a first message from a centralized unit CU, wherein the first message comprises the configuration information.

7. The method according to claim 6, wherein the first message further comprises a first general packet radio service tunneling protocol GTP-tunnel endpoint identifier, the first GTP-tunnel endpoint identifier is used to identify an endpoint of a tunnel on the CU, and the tunnel is used to transmit the measurement information on an F1 interface; and
the method further comprises:
determining, by the DU, a second GTP-tunnel endpoint identifier based on the first GTP-tunnel endpoint identifier, and sending, by the DU, the second GTP-tunnel endpoint identifier to the CU, wherein the second GTP-tunnel endpoint identifier is used to identify an endpoint of the tunnel on the DU, and the tunnel is used to transmit the measurement information on the F1 interface; and
sending, by the DU, the measurement information to the CU, wherein the measurement information comprises the first GTP-tunnel endpoint identifier and the second GTP-tunnel endpoint identifier.

8. The method according to any one of claims 5 to 7, wherein the first message is an F1 setup response message or a CU configuration update response message.

9. A measurement information collection method, comprising:
sending, by a centralized unit CU, a first message to a distributed unit DU, wherein the first message comprises configuration information, the configuration information comprises information about a common channel resource, and the common channel resource is used to transmit measurement information; and
receiving, by the CU, the measurement information from the DU, wherein the measurement information comprises measurement information that is received by the DU on the common channel resource and that is from a terminal device.

10. The method according to claim 9, wherein the first message further comprises a first general packet radio service tunneling protocol GTP-tunnel endpoint identifier, the first GTP-tunnel endpoint identifier is used to identify an endpoint of a tunnel on the CU, and the tunnel is used to transmit the measurement information on an F1 interface; and
the method further comprises:
receiving, by the CU, a second GTP-tunnel endpoint identifier from the DU, wherein the second GTP-tunnel endpoint identifier is used to identify an endpoint of the tunnel on the DU, and the tunnel is used to transmit the measurement information on the F1 interface.

11. The method according to claim 9 or 10, wherein before the sending a first message to a distributed unit DU, the method further comprises: receiving, by the CU, a second message from a near real-time radio access network intelligent controller RIC functional entity, wherein the second message comprises the configuration information.

12. The method according to claim 11, wherein the CU sends the measurement information to the near real-time RIC.

13. The method according to claim 12, wherein the second message further comprises a third GTP-tunnel endpoint identifier, the third GTP-tunnel endpoint identifier is used to identify an endpoint of a tunnel on the near real-time RIC, and the tunnel is used to transmit the measurement information on an E2 interface; and
the method further comprises:
determining, by the CU, a fourth GTP-tunnel endpoint identifier based on the third GTP-tunnel endpoint identifier, and sending, by the CU, the fourth GTP-tunnel endpoint identifier to the RIC, wherein the fourth GTP-tunnel endpoint identifier is used to identify an endpoint of the tunnel on the CU, and the tunnel is used to transmit the measurement information on the E2 interface.

14. The method according to any one of claims 9 to 13, wherein the first message is anFl setup response message or a CU configuration update response message.

15. The method according to any one of claims 11 to 13, wherein the second message is an E2 setup response message or a near real-time RIC configuration update response message.

16. A measurement information collection method, comprising:
sending, by a near real-time radio access network intelligent controller RIC, a first message to a centralized unit CU, wherein the first message comprises configuration information, the configuration information comprises information about a common channel resource, and the common channel resource is used to transmit measurement information; and
receiving, by the RIC, the measurement information from the CU, wherein the measurement information comprises measurement information that is received by a distributed unit DU on the common channel resource and that is from a terminal device.

17. The method according to claim 16, wherein the first message further comprises a first GTP-tunnel endpoint identifier, the first GTP-tunnel endpoint identifier is used to identify an endpoint of a tunnel on the near real-time RIC, and the tunnel is used to transmit the measurement information on an E2 interface; and
the method further comprises: receiving, by the RIC, a second GTP-tunnel endpoint identifier from the CU, wherein the second GTP-tunnel endpoint identifier is used to identify an endpoint of the tunnel on the CU, and the tunnel is used to transmit the measurement information on the E2 interface.

18. The method according to claim 16 or 17, wherein the first message is an E2 setup response message or a near real-time RIC configuration update response message.

19. The method according to any one of claims 5 to 18, wherein the configuration information further comprises a determining parameter, and the determining parameter is used by the terminal to determine whether the measurement information needs to be collected.

20. The method according to claim 16, wherein the determining parameter comprises one or a combination of the following: an area range, a service type, a slice, a slice list, a terminal type, or a terminal selection factor that is applicable to the configuration information.

21. The method according to any one of claims 1 to 20, wherein the configuration information further comprises a measurement item and/or an index value of the configuration information, and the index value of the configuration information is used to distinguish a plurality of sets of configuration information.

22. The method according to any one of claims 1 to 21, wherein the configuration information further comprises one or more of the following: a trigger condition for sending the measurement information, an interval of sending the measurement information, or a quantity of times of sending the measurement information.

23. The method according to any one of claims 1 to 22, wherein the common channel resource comprises one or a combination of the following: a random access resource and a physical uplink shared channel resource.

24. The method according to any one of claims 1 to 23, wherein the measurement information comprises any one of the following: information used for machine learning, a gradient used for federated learning, cell quality, beam quality, radio link failure information, connection setup failure information, an uplink sending delay, or signal strength.

25. The method according to any one of claims 1 to 24, wherein the configuration information further comprises a machine learning model and/or a machine learning algorithm.

26. The method according to any one of claims 1 to 25, wherein the configuration information further comprises a key.

27. The method according to claim 26, wherein the measurement information comprises the key.

28. An apparatus, comprising a processor and a communication interface, wherein the communication interface is configured to communicate with another communication apparatus, and the processor is configured to run a group of programs, to enable the apparatus to implement the method according to any one of claims 1 to 4 and the method performed by the terminal in the method according to any one of claims 21 to 25.

29. An apparatus, comprising a processor and a communication interface, wherein the communication interface is configured to communicate with another communication apparatus, and the processor is configured to run a group of programs, to enable the apparatus to implement the method according to any one of claims 5 to 20 and the method performed by the network device, the centralized unit CU, or the near real-time radio access network intelligent controller RIC in the method according to any one of claims 21 to 25.

30. A computer-readable storage medium, wherein the computer storage medium stores computer-readable instructions, and when the computer-readable instructions are run on a communication apparatus, the communication apparatus is enabled to perform the method according to any one of claims 1 to 25.

31. A chip, wherein the chip is connected to a memory or the chip comprises the memory, and is configured to read and execute a software program stored in the memory, to implement the method according to any one of claims 1 to 25.
